(19) **Europäisches Patentamt / European Patent Office / Office européen des brevets**

(11) **EP 4 760 340 A1**

(12) **EUROPEAN PATENT APPLICATION**
published in accordance with Art. 153(4) EPC

(43) Date of publication:
**17.06.2026 Bulletin 2026/25**

(21) Application number: **24851530.6**

(22) Date of filing: **12.07.2024**

(51) International Patent Classification (IPC):
*G01S 7/486* (2020.01)      *G01S 7/497* (2006.01)
*G01S 17/894* (2020.01)      *G01S 17/931* (2020.01)

(52) Cooperative Patent Classification (CPC):
**G01S 7/486; G01S 7/497; G01S 17/894; G01S 17/931**

(86) International application number:
**PCT/JP2024/025391**

(87) International publication number:
**WO 2025/033101 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 10.08.2023   JP 2023131175
10.08.2023   JP 2023131176
10.08.2023   JP 2023131177
10.08.2023   JP 2023131178

(71) Applicant: **Koito Manufacturing Co., Ltd.**
**Tokyo 141-0001 (JP)**

(72) Inventors:
• **TORII Teruaki**
  **Shizuoka-shi, Shizuoka 424-8764 (JP)**
• **GOTOH Hitoshi**
  **Shizuoka-shi, Shizuoka 424-8764 (JP)**

(74) Representative: **Cabinet Beau de Loménie**
**103, rue de Grenelle / CS 90800**
**75340 Paris Cedex 07 (FR)**

(54) **MEASUREMENT DEVICE, MEASUREMENT METHOD FOR MEASUREMENT DEVICE, AND MANUFACTURING METHOD FOR MEASUREMENT DEVICE**

(57)      A measurement device (10) comprises: a light projector (22) that emits light; a light receiver (32) that has a light receiving surface (34) for receiving reflected light that is the light emitted from the light projector that has returned after being reflected off an object being measured, the light receiving surface including a plurality of photon-counting light receiving elements arranged in an array; and a controller (42). The controller executes: a histogram generation process for generating a histogram on the basis of output values from the plurality of light receiving elements; a light reception timing estimation process for estimating a light reception timing of the reflected light on the basis of a first reach timing at which the histogram first reaches an intermediate value between the maximum value and the minimum value of the waveform of the histogram, and a second reach timing at which the histogram next reaches the intermediate value; and an output process for outputting information corresponding to the distance to the object being measured on the basis of a light projection timing at which the light projector emits the light and the light reception timing.

FIG. 1

**Description**

TECHNICAL FIELD

The present disclosure relates to a measurement device, a measurement method for a measurement device, and a manufacturing method for a measurement device.

BACKGROUND ART

With the progress of autonomous driving (AD) and advanced driver-assistance systems (ADAS), development and research of light detection and ranging (LiDAR) as one of measurement devices used for grasping a surrounding environment and simultaneous localization and mapping during traveling of a vehicle have been advanced. The LiDAR includes a light projector that projects (emits) laser light to a measurement target and a light receiver that receives reflected light of the laser light reflected by the measurement target. The LiDAR outputs information on the measurement target by measuring a distance to the measurement target based on a difference between a light projection timing at which the light projector emits the laser light and a light receiving timing at which the light receiver receives the reflected light.

The light receiver has a light receiving surface on which, for example, a plurality of photon count type light receiving elements (single photon avalanche diode (SPAD)) are arranged in an array. **In** the measurement device, an integrated value obtained by integrating output values from a predetermined number of light receiving elements for a predetermined time is processed as one pixel to generate a histogram, and a light receiving timing is determined based on the histogram (for example, see Patent Literature 1).

In addition, the measurement device in the related art writes, in a memory, all of light receiving data groups corresponding to an assumed time from when light is emitted from the light projector to when the light is reflected by the measurement target and returns to the light receiver.

CITATION LIST

PATENT LITERATURE

Patent Literature 1: JP2018-091760A

SUMMARY OF INVENTION

TECHNICAL PROBLEM

However, an incident light amount of the reflected light on the light receiving surface may be in a saturated state exceeding a predetermined upper limit value. **In** the saturated state, a waveform of the histogram reaches the upper limit value before a peak timing of the incident light amount of the reflected light on the light receiving surface arrives, and a timing when the waveform of the histogram first reaches the upper limit value is regarded as the light receiving timing of the reflected light. Therefore, in the saturated state, the distance to the measurement target may be measured to be a shorter distance than an actual distance. In addition, in the saturated state, the incident light amount of the reflected light cannot be estimated in the first place.

**In** addition, in the measurement device in the related art, the number of light receiving elements constituting one pixel and the integration count obtained by integrating the output signals of the light receiving elements are both fixed. Therefore, for example, detection performance of the reflected light and resolution of an image cannot be changed, and there is room for improvement. Such a problem is not limited to a photon count type light receiving element, and is a problem common to a measurement device in which a plurality of analog output type light receiving elements are arranged in an array.

**In** addition, in the measurement device in the related art, a large-capacity memory capable of storing all of light receiving data groups corresponding to an assumed time is essential. Conversely, when the capacity of the memory is reduced, the distance that may be measured by the measurement device is shortened.

**In** addition, in the measurement device in the related art, for example, the distance to a measurement target may not be accurately measured due to a variation in the light projection timing from the light projector or a variation in an output timing of a light receiving signal from the light receiving element in the light receiver. Factors of the variation in the light projection timing include a variation in a wiring length connected to a plurality of light projecting elements, a variation in an output timing of a trigger signal given to the light projector, and the like. Factors of the variation in the output timing of the light receiving signal include a variation in a wiring length connected to the plurality of light receiving elements and a variation in response characteristics.

An object of the present disclosure is to solve at least one of the problems described above.

SOLUTION TO PROBLEM

A measurement device according to a first aspect of the present disclosure including:

a light projector configured to emit light;
a light receiver including a light receiving surface on which a plurality of photon count type light receiving elements are arranged in an array, the light receiver being configured to receive reflected light that is the light emitted from the light projector and reflected by a measurement target; and
a controller, in which
the controller executes
histogram generation processing of generating a histogram based on output values from the plurality of light receiving elements,
light receiving timing estimation processing of estimating a light receiving timing of the reflected light based on a first arrival timing at which the histogram first reaches an intermediate value between a maximum value and a minimum value of a waveform of the histogram and based on a second arrival timing at which the histogram next reaches the intermediate value, and
output processing of outputting information corresponding to a distance to the measurement target based on a light projection timing at which the light projector emits light and the light receiving timing.

A measurement device according to a second aspect of the present disclosure including:

a light projector configured to emit light;
a light receiver including a light receiving surface on which a plurality of photon count type light receiving elements are arranged in an array, the light receiver being configured to receive reflected light that is the light emitted from the light projector and reflected by a measurement target; and
a controller, in which
the controller executes
histogram generation processing of generating a histogram based on output values from the plurality of light receiving elements, and
first incident light amount estimation processing of estimating an incident light amount of the reflected light based on a time difference between a first arrival timing at which the histogram first reaches an intermediate value between a maximum value and a minimum value of a waveform of the histogram and a second arrival timing at which the histogram next reaches the intermediate value.

A measurement device according to a third aspect of the present disclosure including:

a light projector configured to emit light;
a light receiver including a light receiving surface on which a plurality of light receiving elements are arranged in an array, the light receiver being configured to receive reflected light that is the light emitted from the light projector and reflected by a measurement target; and
a controller, in which
the controller executes
first measurement processing of acquiring, for the plurality of light receiving elements arranged in at least a part of a target region of the light receiving surface, output values of the plurality of light receiving elements in a first acquisition unit determined by the number of the light receiving elements constituting one pixel and an integration count of the output values of the light receiving elements, and measuring a distance to the measurement target based on an obtained output result, and
second measurement processing of acquiring, for the plurality of light receiving elements arranged in the target region, output values of the plurality of light receiving elements in a second acquisition unit in which at least one of the number of light receiving elements constituting one pixel and the number of times of integration of output values of the light receiving elements is different from that for the first acquisition unit, and measuring a distance to the measurement target based on an obtained output result.

A measurement device according to a fourth aspect of the present disclosure including:

a light projector configured to emit light;

a light receiver including a light receiving surface on which a plurality of light receiving elements are arranged in an array, the light receiver being configured to receive reflected light that is the light emitted from the light projector and reflected by a measurement target;

a controller; and

a memory, in which

the controller executes

update processing of repeatedly executing an update operation of writing light receiving data output from the plurality of light receiving elements into the memory after a light projection timing of the light projector, and overwriting the memory with light receiving data output from the plurality of light receiving elements thereafter when a writing amount of the light receiving data reaches a reference value of the memory, and

when reflected light receiving data, which is the light receiving data corresponding to the reflected light, is written into the memory, measurement processing of extracting a light receiving data group including the reflected light receiving data and measuring a distance to the measurement target.

A measurement method for a measurement device according to an aspect of the present disclosure, the measurement device including a light projector configured to emit light, a light receiver including a light receiving surface on which a plurality of light receiving elements are arranged in an array, the light receiver being configured to receive reflected light that is the light emitted from the light projector and reflected by a measurement target, and a memory, the measurement method including:

an update step of repeatedly executing an update operation of writing light receiving data output from the plurality of light receiving elements into the memory after a light projection timing of the light projector, and overwriting the memory with light receiving data output from the plurality of light receiving elements thereafter when a writing amount of the light receiving data reaches a reference value of the memory; and

when reflected light receiving data, which is the light receiving data corresponding to the reflected light, is written into the memory, a measurement step of extracting a light receiving data group including the reflected light receiving data and measuring a distance to the measurement target.

A manufacturing method for a measurement device according to an aspect of the present disclosure, the measurement device including a light projector having one or a plurality of light emitting elements, a light receiver including a light receiving surface on which a plurality of light receiving elements are arranged in an array, the light receiver being configured to receive reflected light that is the light emitted from the light projector and reflected by a measurement target, and a controller configured to control the light projector and the light receiver, the manufacturing method including:

a preparation step of preparing a sample measurement target having a flat surface;

an acquisition step of causing the light projector to emit light toward the flat surface of the sample measurement target, causing the light receiving surface of the light receiver to receive the reflected light reflected by the flat surface, and acquiring a measurement result of a distance to the flat surface for each pixel based on a plurality of sample light receiving signals output from the plurality of light receiving elements; and

a correction step of correcting at least one of a light emitting timing of the light emitting element and an output timing of a light receiving signal from the light receiving element such that the measurement result of the distance for each pixel is approximate to uniformity.

ADVANTAGEOUS EFFECTS OF INVENTION

With the measurement device according to the first aspect of the present disclosure, the light receiving timing can also be estimated based on the first arrival timing and the second arrival timing when the incident light amount of the reflected light on the light receiving surface is in a saturated state.

With the measurement device according to the second aspect of the present disclosure, the incident light amount of the reflected light can also be estimated based on a waveform width of the histogram when the incident light amount of the reflected light on the light receiving surface is in a saturated state.

With the measurement device according to the third aspect of the present disclosure, it is possible to change detection performance of the reflected light, resolution, and a frame rate by, for example, changing at least one of the number of light receiving elements constituting one pixel and an integration count of output values of the light receiving elements constituting one pixel. Accordingly, it is possible to measure a distance to the measurement target while changing the detection performance of the reflected light or the like.

With the measurement device according to the fourth aspect of the present disclosure, it is possible to measure the distance to the measurement target while reducing the memory capacity for storing the light receiving data, as compared with a configuration in which the light receiving data corresponding to the assumed time until the light is emitted from the light projector, reflected by the measurement target, and returned to the light receiver is written in the memory.

With the measurement method for a measurement device according to an aspect of the present disclosure, it is possible to measure the distance to the measurement target while reducing the memory capacity for storing the light receiving data, as compared with a method in which the light receiving data corresponding to the assumed time until the light is emitted from the light projector, reflected by the measurement target, and returned to the light receiver is written in the memory.

With the manufacturing method for a measurement device according to the first aspect of the present disclosure, it is possible to prevent a decrease in measurement accuracy of the distance to the measurement target due to, for example, a variation in the light projection timing from the light projector, or a variation in the output timing of the light receiving signal from the light receiving element in the light receiver.

BRIEF DESCRIPTION OF DRAWINGS

[FIG. 1] FIG. 1 is a block diagram schematically illustrating a configuration of a measurement device 10 in a first embodiment.
[FIG. 2] FIG. 2 is a diagram illustrating a relation between output values of SPADs constituting one pixel and a histogram.
[FIG. 3] FIG. 3 is a flowchart illustrating measurement processing to be executed by a TOF measurement device 40 and a control circuit 42.
[FIG. 4] FIG. 4 is a diagram illustrating a histogram in a non-saturated state.
[FIG. 5] FIG. 5 is a diagram illustrating a histogram in a saturated state.
[FIG. 6] FIG. 6 is a diagram illustrating a relation between a level of an incident light amount of disturbance light L3 and a second arrival timing T2.
[FIG. 7] FIG. 7 is a diagram illustrating a relation between a level of an incident light amount of reflected light L2 and a light receiving timing of the reflected light L2.
[FIG. 8] FIG. 8 is a diagram illustrating a relation between the incident light amount of the reflected light L2 and a peak intensity (SPAD output value) of the histogram.
[FIG. 9] FIG. 9 is a diagram illustrating a relation between the incident light amount of the reflected light L2 and the peak intensity (SPAD output value) of the histogram for each region.
[FIG. 10] FIG. 10 is a block diagram schematically illustrating a configuration of a measurement device 1010 in a second embodiment.
[FIG. 11] FIG. 11 is a diagram illustrating a relation between output values of SPADs constituting one pixel and a histogram.
[FIG. 12] FIG. 12 is a flowchart illustrating measurement processing to be executed by a TOF measurement device 1040 and a control circuit 1042.
[FIG. 13] FIG. 13 is a diagram illustrating a difference in a SPAD integration count U between reference measurement processing and low frame rate measurement processing.
[FIG. 14] FIG. 14 is a diagram illustrating a difference in the SPAD unit number M between the reference measurement processing and low resolution measurement processing.
[FIG. 15] FIG. 15 is a block diagram schematically illustrating a configuration of a measurement device 2010 in a third embodiment.
[FIG. 16] FIG. 16 is a diagram illustrating a variation in a light projection timing and an output timing of a light receiving signal and a result of distance measurement.
[FIG. 17] FIG. 17 is a flowchart illustrating a part of memory processing.
[FIG. 18] FIG. 18 is a diagram illustrating memory processing of an example and a comparative example.
[FIG. 19] FIG. 19 is a diagram illustrating memory processing of a first pixel and a second pixel.
[FIG. 20] FIG. 20 is a block diagram schematically illustrating a configuration of a measurement device 3010 in a fourth embodiment.
[FIG. 21] FIG. 21 is a diagram illustrating a variation in a light projection timing and an output timing of a light receiving signal and a result of distance measurement.
[FIG. 22] FIG. 22 is a flowchart illustrating a part of a manufacturing step of the measurement device 3010.
[FIG. 23] FIG. 23 is a diagram of an example of a correction method using wiring.

DESCRIPTION OF EMBODIMENTS

A. First Embodiment:

A-1. Configuration of Measurement Device 10:

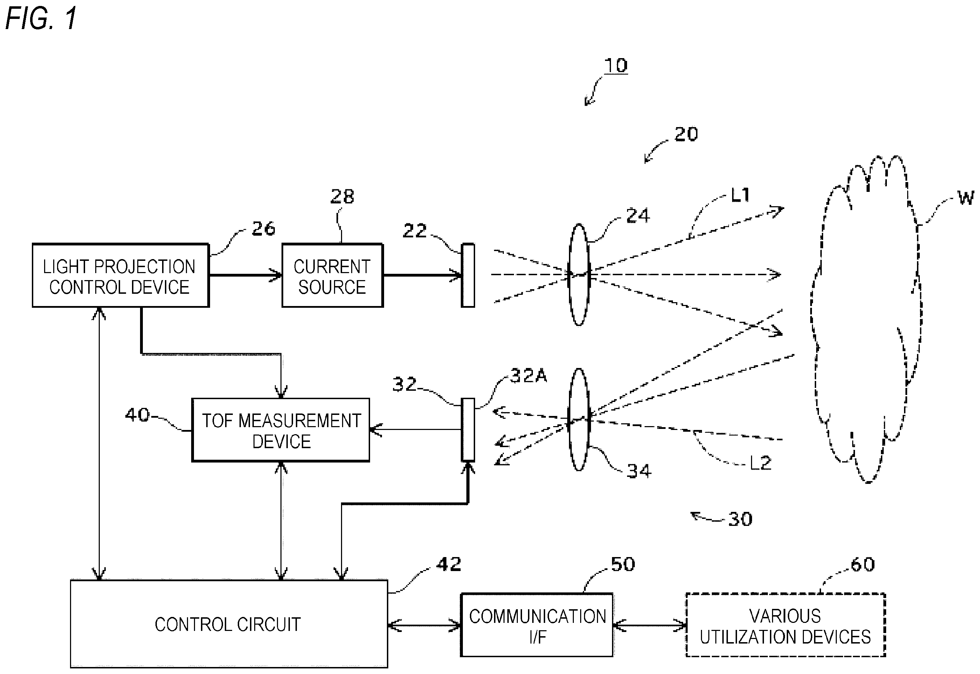

FIG. 1 is a block diagram schematically illustrating a configuration of a measurement device 10 according to a first embodiment. As illustrated in FIG. 1, the measurement device 10 includes a light projector 20 that emits emitted light L1 (for example, light beam (laser light)) to a measurement target W, and a light receiver 30 that receives reflected light L2 (return light) that is the emitted light L1 reflected by the measurement target W, and functions as a LiDAR. The measurement device 10 measures a difference between a timing at which the light projector 20 emits the emitted light L1 and a timing at which the light receiver 30 receives the reflected light L2 (referred to as time of flight of laser light, hereinafter, "time of flight" (TOF)) and acquires information on the measurement target W.

The measurement device 10 is mounted on, for example, a vehicle on which an AD or an ADAS is mounted (not illustrated). For example, the measurement device 10 assists detection of an object such as a person or another vehicle during traveling of the vehicle, and provides other devices or users with various types of information useful for ensuring safety of a driver of the vehicle or a person present around the vehicle and reducing damage to the object present around the vehicle during driving of the vehicle.

The light projector 20 includes a light source 22, a light projection optical system 24, a light projection control device 26, and a current source 28.

The light source 22 includes one or a plurality of light emitting elements (not illustrated) or a light emitting source having one or a plurality of light emitting element arrays (for example, light emitting element array in which light emitting elements are arranged linearly (one-dimensionally) or planarly (two-dimensionally)). The light emitting element is, for example, a laser diode, a surface light emitting type laser light emitting element (for example, vertical cavity surface emitting laser (VCSEL), hereinafter, referred to as "surface light emitting element"), or a surface light emitting element array (for example, VCSEL array) in which a plurality of surface light emitting elements are one-dimensionally or two-dimensionally arranged on a substrate (semiconductor substrate, ceramic substrate, or the like).

The current source 28 supplies a current corresponding to a control signal received from the light projection control device 26 to the light emitting element constituting the light source 22. The current source 28 supplies, to the light emitting element, for example, a periodic square wave current for turning on and off a current flowing through the light emitting element.

The light projection control device 26 controls a current (drive current) supplied from the current source 28 to the light emitting element by generating a control signal of the current source 28 and inputting the control signal to the current source 28. The light projection control device 26 inputs a signal indicating a timing at which the light emitting element emits light (timing at which light emitting element emits light, hereinafter, referred to as "light projection timing") to a TOF measurement device 40. For example, the light projection control device 26 causes the light emitting element to periodically and repeatedly emit light by performing control to periodically and repeatedly turn on and off the current flowing through the light emitting element.

The light projection optical system 24 adjusts light distribution of the emitted light L1 by, for example, applying an optical action (refraction, scattering, diffraction, or the like) to the light emitted by the light source 22. The light projection optical system 24 includes, for example, various lenses such as a collimator lens and optical components such as a reflector (mirror).

The light receiver 30 includes a light receiving unit 32 and a light receiving optical system 34.

The light receiving optical system 34 condenses, on the light receiving unit 32, the reflected light L2, which is the emitted light L1 from the light projector 20 reflected by the measurement target W or the like. The light receiving optical system 34 includes, for example, various lenses such as a condenser lens, various filters such as a wavelength filter, and optical components such as a reflector (mirror).

The light receiving unit 32 includes a plurality of light receiving elements. The light receiving unit 32 photoelectrically converts the reflected light L2 incident from the light receiving optical system 34 to generate a light receiving signal having a current level or a voltage level corresponding to an intensity of the reflected light L2. The light receiving unit 32 inputs, to the TOF measurement device 40, a signal indicating a timing at which the light receiving element constituting the light receiving unit 32 receives the reflected light L2 (hereinafter, referred to as "light receiving timing") or a light receiving signal generated by the light receiving element.

The measurement device 10 further includes the TOF measurement device 40, a control circuit 42, and a communication I/F (inter face) 50. In the present embodiment, the TOF measurement device 40 and the control circuit 42 are examples of a controller.

The TOF measurement device 40 obtains the TOF based on the signal indicating the light projection timing received from the light projection control device 26 and the signal indicating the light receiving timing received from the light receiving unit 32. The TOF measurement device 40 includes, for example, a time measurement integrated circuit (IC) equipped with a time to digital converter (TDC) circuit. The TOF measurement device 40 inputs, to the control circuit 42, the obtained TOF and the light receiving signal received from the light receiving unit 32.

The control circuit 42 includes a processor (central processing unit (CPU), micro processing unit (MPU), application specific integrated circuit (ASIC), field programmable gate array (FPGA), digital signal processor (DSP), or the like). The control circuit 42 generates information used for various measurements such as detection of the measurement target W and distance measurement based on the light receiving signal and the TOF received from the TOF measurement device 40. Examples of the information include a histogram used in time correlated signal photon counting, a distance to each point of the measurement target W, and pointcloud. The control circuit 42 controls the light projection control device 26 and the light receiving unit 32. The control circuit 42 controls, for example, the light projection control device 26 and the light receiving unit 32 to control the light projection timing and the light receiving timing described above such that processing related to generation of the histogram is accelerated or optimized. The information generated by the control circuit 42 is provided (transmitted) to a device that uses the information (hereinafter referred to as "various utilization devices 60") via the communication I/F 50.

The various utilization devices 60 perform, for example, creation of an environment map by pointcloud, or simultaneous localization and mapping (SLAM) using a scan matching algorithm (normal distributions transform (NDT), iterative closest point (ICP), or the like).

A-2. Signal Processing in TOF Measurement Device 40:

In the present embodiment, the light receiver 30 (light receiving unit 32) has a light receiving surface 32A on which a plurality of light receiving elements are arranged in an array linearly (one-dimensionally) or planarly (two-dimensionally). In the present embodiment, the light receiving element is a SPAD as an example of a photon count type light receiving element. The SPAD responds with a predetermined probability (for example, 20%) when a photon is incident, and outputs one pulse when a photon is detected.

In the light receiving unit 32 using the SPAD, one pixel in an image acquired based on the light receiving signal from the SPAD (hereinafter, referred to as "light receiving image") is defined by the "SPAD unit number M" and the "SPAD integration count U". The SPAD unit number M is the number of SPADs adjacent to one another on the light receiving surface 32A. For example, in a configuration in which a plurality of SPADs are two-dimensionally arranged on the light receiving surface 32A, the SPAD unit number M is 9 (= 3 $\times$ 3) or 16 (= 4 $\times$ 4). As the SPAD unit number M increases, the resolution of the light receiving image decreases. The SPAD integration count U is the number of times the output value of each SPAD is integrated at each predetermined sampling timing. A large SPAD integration count U means that the integration time of the output value of SPAD is long. As the SPAD integration count U increases, a frame rate of the light receiving image (number of images (frames) constituting moving image per second) decreases. The TOF measurement device 40 generates a histogram for each pixel based on the output values of the SPADs constituting the pixel.

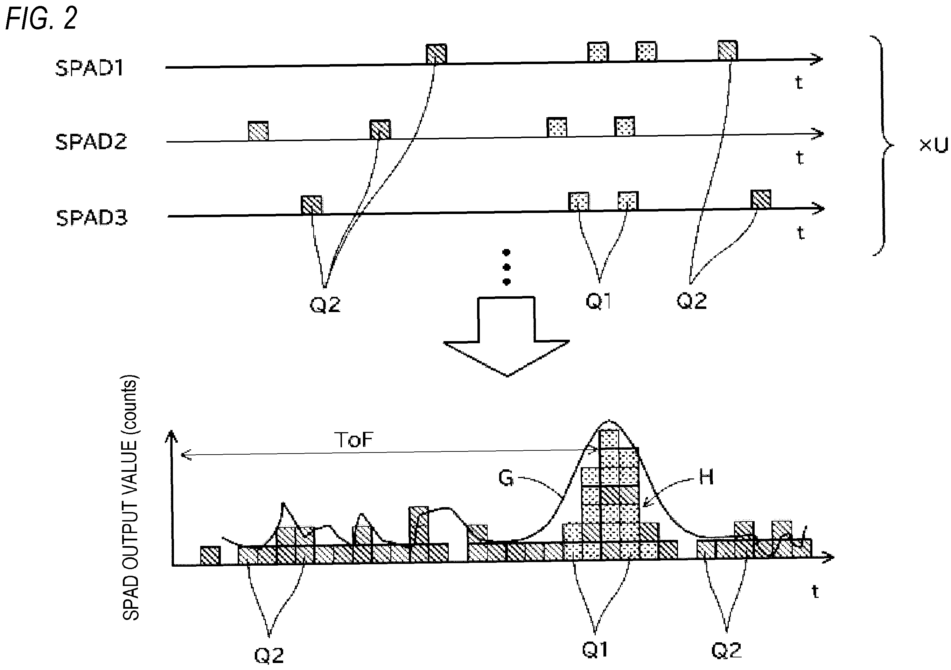

FIG. 2 is a diagram illustrating a relation between the output values of the SPADs constituting one pixel and the histogram. An upper part of FIG. 2 illustrates a temporal change in the output value of each SPAD. A lower part of FIG. 2 illustrates a graph G illustrating a temporal change in an incident light amount (light receiving intensity, irradiation intensity) per unit area of light (including reflected light L2 and disturbance light (background light) L3) emitted to one pixel of the light receiving surface 32A, and a histogram H generated by the TOF measurement device 40. Q1 in FIG. 2 means one pulse output in a case where each SPAD detects a photon when the reflected light L2 is incident, and Q2 means one pulse output in a case where each SPAD detects a photon when only the disturbance light L3 is incident without the reflected light L2 being incident.

In the graph G, a waveform indicating a relatively high peak intensity is a waveform when the reflected light L2 is incident on the light receiving surface 32A, and a waveform indicating a relatively low peak intensity is a waveform when only the disturbance light L3 is incident on the light receiving surface 32A without the reflected light L2 being incident. An incident light amount of the reflected light L2 is higher than an incident light amount of the disturbance light L3. Therefore, as illustrated in the histogram H, the detection number of photons in one pixel statistically increases when the reflected light L2 is incident on the light receiving surface 32A, and the detection number of photons in one pixel statistically decreases when only the disturbance light L3 is incident on the light receiving surface 32A without the reflected light L2 being incident. The TOF measurement device 40 estimates the light receiving timing based on a timing corresponding to the waveform indicating a relatively high peak in the histogram H.

A-3. Estimation Processing of Light Receiving Timing of Reflected Light L2 and Reflectance of Measurement Target W:

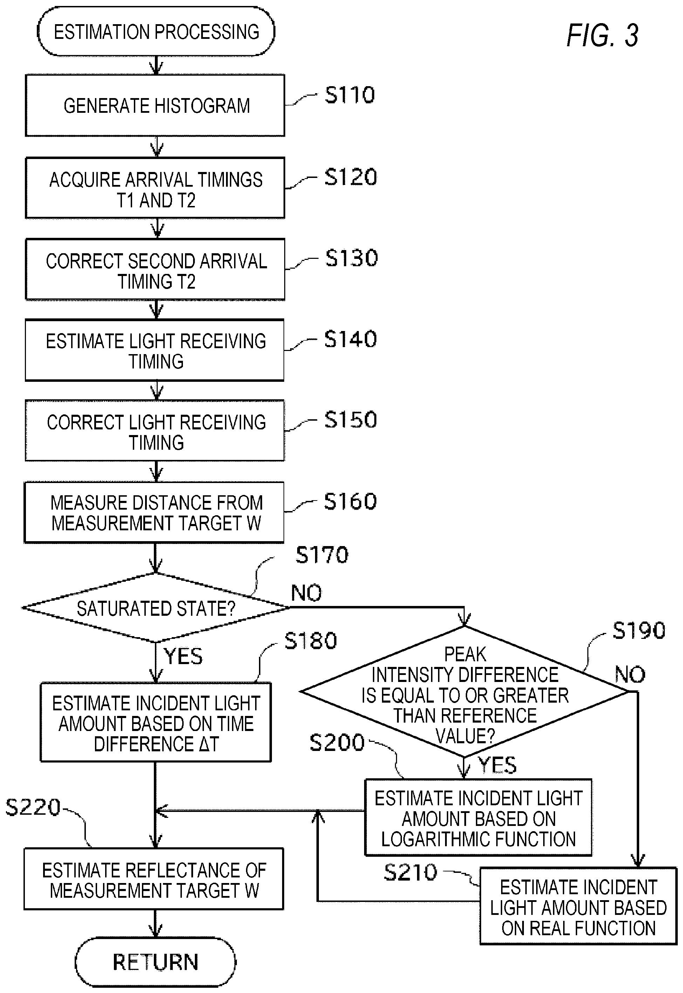

FIG. 3 is a flowchart illustrating measurement processing to be executed by the TOF measurement device 40 and the control circuit 42. In the measurement processing, the light receiving timing of the reflected light L2 and the reflectance of the measurement target W are estimated.

Estimation on Light Receiving Timing of Reflected Light L2

As illustrated in FIG. 3, the TOF measurement device 40 executes histogram generation processing of generating a histogram based on the output values from the plurality of SPADs (S110). The TOF measurement device 40 sequentially stores the output values from the plurality of SPADs in a predetermined memory area. The TOF measurement device 40 reads the output values from the plurality of SPADs recorded in the memory area at each predetermined sampling timing, and sequentially generates a histogram for each pixel. The TOF measurement device 40 extracts a histogram including a signal waveform of the reflected light L2 based on comparison between the sequentially generated histogram and a signal detection threshold. In the present embodiment, the signal detection threshold is the same value as a determination threshold for determining presence or absence of the reflected light L2, but may be a value lower than the determination threshold.

Next, the TOF measurement device 40 acquires a first arrival timing T1 and a second arrival timing T2 in the extracted histogram including the signal waveform of the reflected light L2 (S120). The first arrival timing T1 is a timing at which the waveform of the histogram first reaches an intermediate value Lh, and the second arrival timing T2 is a timing at which the waveform of the histogram next reaches the intermediate value Lh. The intermediate value Lh is a value between a maximum value (corresponding to peak of signal waveform of reflected light L2) and an average value (corresponding to signal waveform of disturbance light L3) of the waveform of the histogram. Further, the intermediate value Lh is preferably a value obtained by adding, to a minimum value, a value of a height of a predetermined ratio to a difference between the maximum value and the minimum value. In the present embodiment, the predetermined ratio is 1/2, and without being limited thereto, may be 3/4, for example.

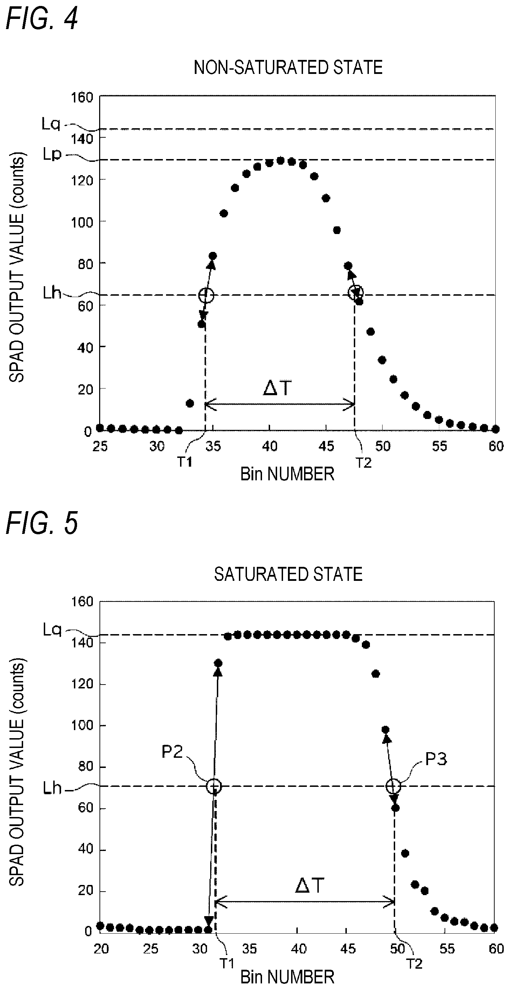

FIG. 4 is a diagram illustrating a histogram in a non-saturated state. FIG. 5 is a diagram illustrating a histogram in a saturated state. The non-saturated state is a state in which a peak intensity Lp of the histogram is less than a predetermined saturation level Lq as illustrated in FIG. 4, and the saturated state is a state in which the peak intensity Lp of the histogram reaches the predetermined saturation level Lq as illustrated in FIG. 5. In the non-saturated state, the peak timing at which the peak intensity is reached can be specified based on the waveform of the histogram and estimated as the light receiving timing.

On the other hand, in the saturated state, the waveform of the histogram reaches the saturation level Lq and becomes flat before the peak timing of the incident light amount of the reflected light L2 on the light receiving surface 32A (hereinafter, referred to as "light receiving timing of reflected light L2") arrives, and there are a plurality of timings at which the waveform of the histogram reaches the peak, and thus the peak timing cannot be specified. Here, in a case where the timing at which the waveform of the histogram first reaches the saturation level Lq is the light receiving timing of the reflected light L2, there is a problem that the distance to the measurement target W is measured to be a shorter distance than the actual distance.

On the other hand, the present inventor has newly found that a temporal relative relation between the first arrival timing T1 and the second arrival timing T2 of the histogram correlates with the light receiving timing of the reflected light L2. That is, the light receiving timing of the reflected light L2 can be estimated based on the first arrival timing T1 and a time difference ∆T between the first arrival timing T1 and the second arrival timing T2. Therefore, in the present embodiment, the light receiving timing of the reflected light L2 can be estimated not only in the non-saturated state but also in the saturated state.

Next, the TOF measurement device 40 executes arrival timing correction processing (S130). The arrival timing correction processing is processing of correcting the second arrival timing T2 according to the level of the incident light amount of the disturbance light L3 on the light receiving surface 32A. Specifically, the TOF measurement device 40 appropriately executes disturbance light histogram generation processing of generating a disturbance light histogram based on the output values from the plurality of SPADs when the light receiving surface 32A is irradiated with only the disturbance light L3 without being irradiated with the reflected light L2. The TOF measurement device 40 corrects the second arrival timing T2 according to a height of the average value of the disturbance light histogram generated in the disturbance light histogram generation processing.

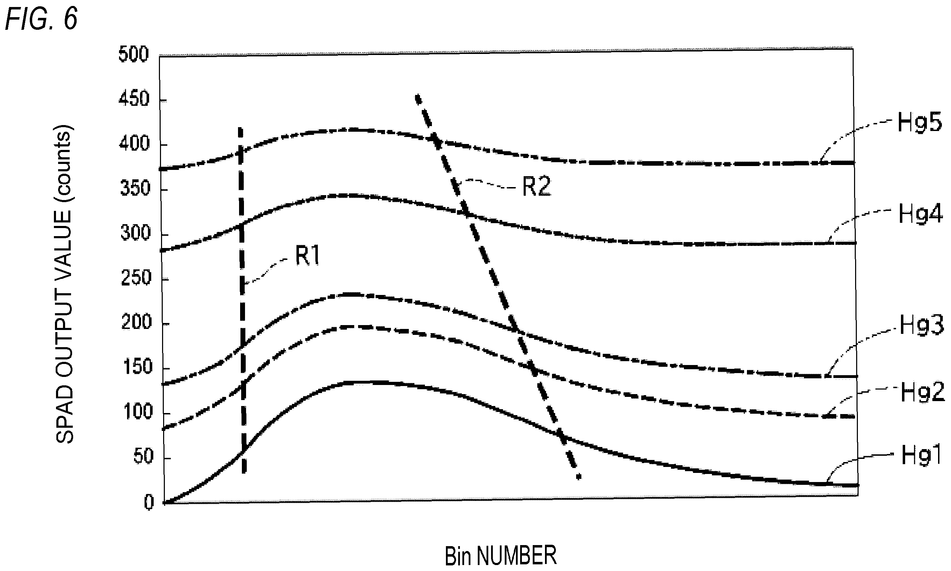

FIG. 6 is a diagram illustrating a relation between the level of the incident light amount of the disturbance light L3 and the second arrival timing T2. Reference signs Hg1 to Hg5 in FIG. 6 are disturbance light histograms having different incident light amounts of the disturbance light L3. The reference sign R1 is an approximate straight line of a plurality of first arrival timings T1 under a situation where the incident light amount of the reflected light L2 is the same and the incident light amount of the disturbance light L3 is different from one another. The reference sign R2 is an approximate straight line of a plurality of second arrival timings T2 under a situation where the incident light amount of the reflected light L2 is the same and the incident light amount of the disturbance light L3 is different from one another. As can be seen from FIG. 6, the first arrival timing T1 is constant regardless of the level of the incident light amount of the disturbance light L3 when the incident light amount of the reflected light L2 is the same. On the other hand, even when the incident light amount of the reflected light L2 is the same, the second arrival timing T2 is a timing closer to the first arrival timing T1 as the incident light amount of the disturbance light L3 is higher. Therefore, the TOF measurement device 40 corrects, based on a linear function of the approximate straight line R2, the second arrival timing T2 to a later timing (timing away from first arrival timing T1) as the incident light amount of the disturbance light histogram increases.

Next, the TOF measurement device 40 executes light receiving timing estimation processing (S140). The TOF measurement device 40 estimates the light receiving timing of the reflected light L2 based on the first arrival timing T1 and the second arrival timing T2 (or corrected second arrival timing T2). For example, a timing obtained by adding, to the first arrival timing T1, a value obtained by multiplying the time difference ΔT between the first arrival timing T1 and the second arrival timing T2 by a predetermined time ratio (for example, 1/2 or 3/8) is set as the light receiving timing of the reflected light L2.

Next, the TOF measurement device 40 executes light receiving timing correction processing (S150). The light receiving timing correction processing is processing of correcting the light receiving timing of the reflected light L2 according to the level of the incident light amount of the reflected light L2 on the light receiving surface 32A.

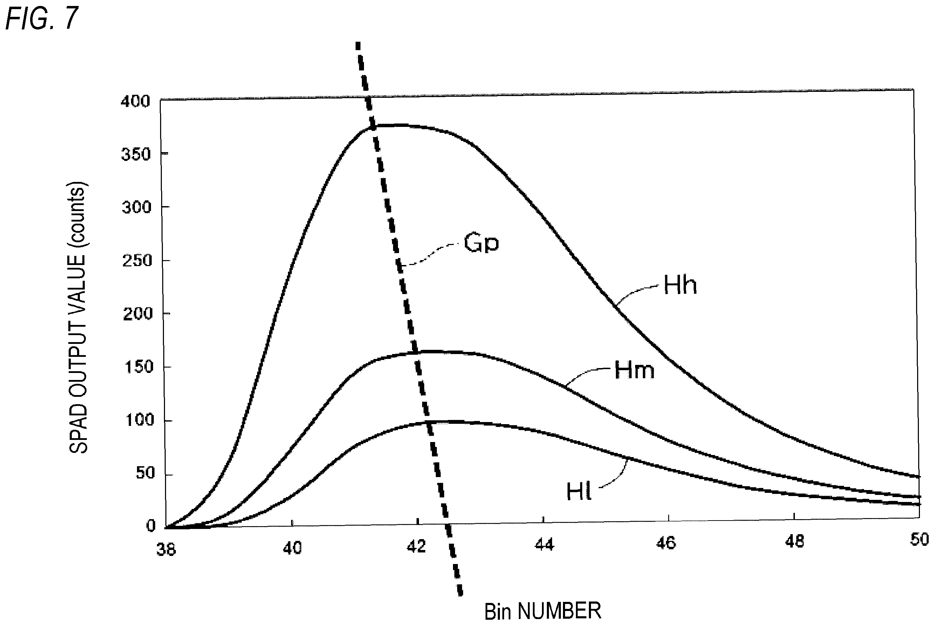

FIG. 7 is a diagram illustrating the relation between the level of the incident light amount of the reflected light L2 and the light receiving timing of the reflected light L2. Reference signs Hh to Hl in FIG. 7 are histograms in which the incident light amounts of the reflected light L2 are different from one another. A reference sign Gp is an approximate straight line of a plurality of light receiving timings (peak timings of incident light amount of reflected light L2) under a situation where the incident light amounts of the reflected light L2 are different from one another. As can be seen from FIG. 7, the light receiving timing is an earlier timing as the incident light amount of the reflected light L2 is higher. Therefore, the TOF measurement device 40 corrects the second arrival timing T2 to a later timing as the peak intensity of the histogram is higher based on a linear function of the approximate straight line Gp.

Here, the present inventor has newly found that the time difference ΔT between the first arrival timing T1 and the second arrival timing T2 correlates with the peak intensity (height) of the incident light amount of the reflected light L2 on the light receiving surface 32A. That is, since a width of the waveform of the histogram increases as the peak intensity of the incident light amount of the reflected light L2 increases, the time difference ΔT between the first arrival timing T1 and the second arrival timing T2 increases accordingly. Therefore, the peak intensity of the incident light amount of the reflected light L2 can also be estimated based on the time difference ΔT between the first arrival timing T1 and the second arrival timing T2, for example, in the saturated state. The TOF measurement device 40 corrects, based on the linear function of the approximate straight line Gp, the second arrival timing T2 to a later timing as the time difference ΔT between the first arrival timing T1 and the second arrival timing T2 is longer.

Thereafter, the TOF measurement device 40 measures the distance to the measurement target W based on the light receiving timing (or corrected light receiving timing), and outputs information corresponding to the distance to the utilization device 60 (S160). The processing of S160 is an example of output processing. As described above, the TOF measurement device 40 can measure the distance to the measurement target W by the following Formula A.

Distance (m) = [A × "Bin number corresponding to first arrival timing T1" + B × ("Bin number corresponding to second arrival timing T2" + C × BG intensity)] + (D × peak intensity) + E] × F    <Formula A>

A, B: weighting coefficient
C: correction coefficient in arrival timing correction processing
BG intensity: intensity of disturbance light L3
D: correction coefficient in light receiving timing correction processing
E: total offset coefficient (for example, correction coefficient for canceling deviation in light projection timing)
F: coefficient for converting Bin number of histogram into distance (m) to measurement target W
A to F may be appropriately changed according to individual differences of the measurement device 10, changes in the surrounding environment, and the like.

Estimation on Reflectance of Measurement Target W

Next, the TOF measurement device 40 executes processing for estimating the reflectance of the measurement target W.

Reflectance ρ of the measurement target W can be estimated using the following Formula B (LiDAR equation).

<Formula B>

$$P_{RX} = P_{TX} \cdot \rho \cdot (D_{RX}/2R)^2 \cdot \gamma$$

$P_{RX}$: incident light amount of reflected light L2

$P_{TX}$: emitted light amount of emitted light L1

$\rho$: reflectance of measurement target W

$D_{RX}$: diameter of light receiving surface 32A

R: distance to measurement target W

$\gamma$: light transmittance of optical system (light projection optical system 24 or light receiving optical system 34)

That is, when the incident light amount $P_{RX}$ of the reflected light L2 can be estimated, the reflectance $\rho$ of the measurement target W can be estimated based on the above Formula B.

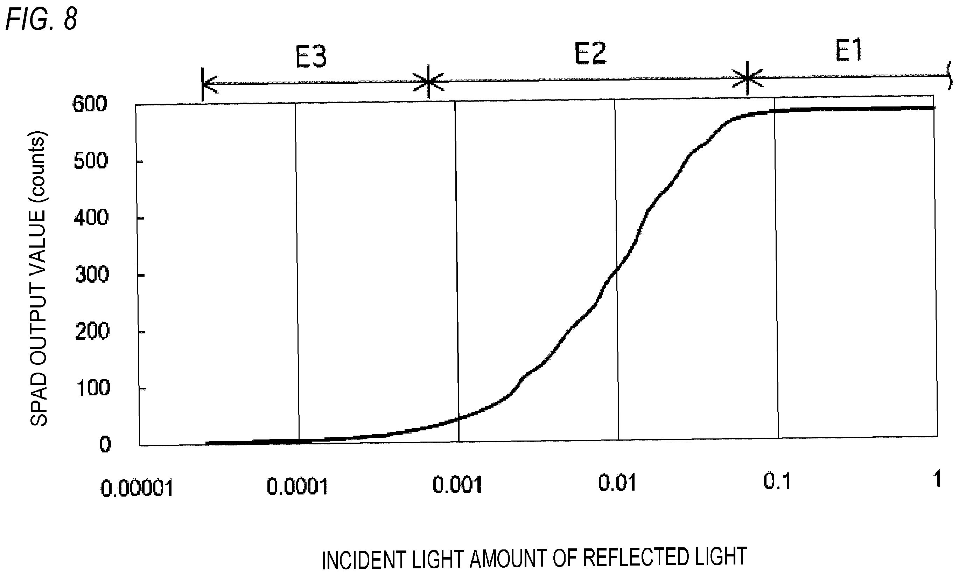

FIG. 8 is a diagram illustrating a relation between the incident light amount of the reflected light L2 and the peak intensity (SPAD output value) of the histogram when the reflected light L2 is incident on the light receiving surface 32A. As illustrated in FIG. 8, a correlation relation between the incident light amount of the reflected light L2 and the peak intensity of the histogram is non-linear in a measurement device using a photon count type light receiving element (SPAD), unlike a measurement device using an analog output type light receiving element. Therefore, in the present embodiment, the incident light amount of the reflected light L2 is estimated by different estimation methods depending on which of a "first region E1", a "second region E2", and a "third region E3" the incident light amount of the reflected light L2 belongs to.

"First region E1": saturated region (peak intensity of histogram = saturation level Lq, incident light amount of reflected light L2 $\geq$ saturation level Lq)

"Second region E2": non-saturated region (peak intensity difference between histogram and disturbance light L3 $\geq$ reference value, incident light amount of reflected light L2 < saturation level Lq)

"Third region E3": non-saturated region (peak intensity difference between histogram and disturbance light L3 < reference value, incident light amount of reflected light L2 < saturation level Lq)

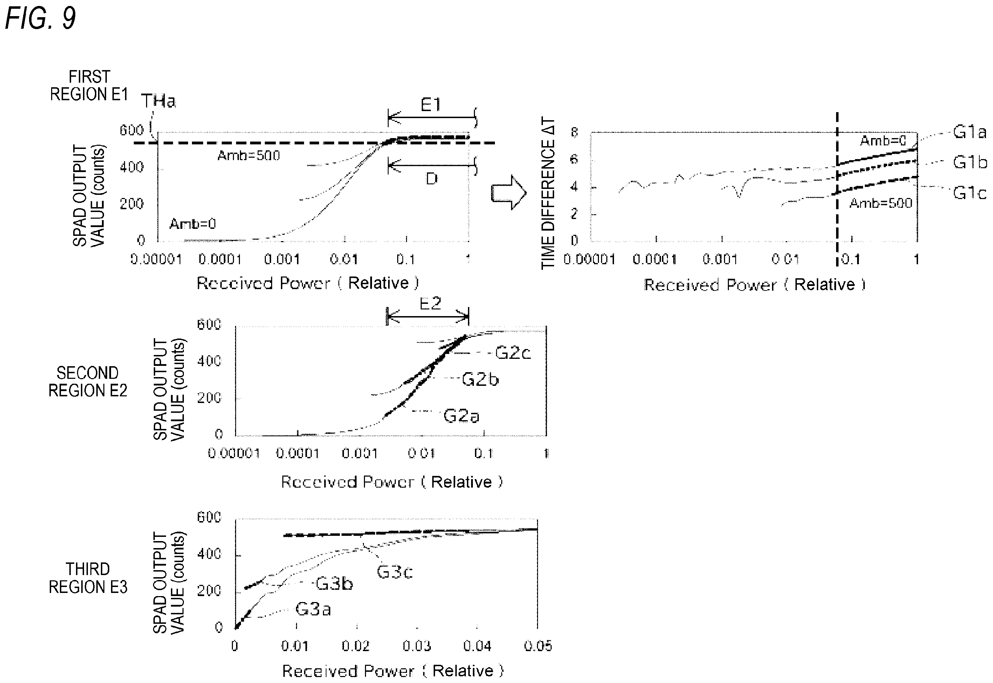

FIG. 9 illustrates a relation between the incident light amount of the reflected light L2 and the peak intensity (SPAD output value) of the histogram for each region.

The TOF measurement device 40 determines whether the incident light amount of the reflected light L2 is in the saturated state based on the histogram when the reflected light L2 is incident on the light receiving surface 32A (S170). When it is determined to be in the saturated state (S170: YES), the TOF measurement device 40 estimates the peak intensity of the incident light amount of the reflected light L2 based on the time difference $\Delta T$ between the first arrival timing T1 and the second arrival timing T2 (S180) as in the light receiving timing correction processing. The processing of S180 is an example of first incident light amount estimation processing. Specifically, the peak intensity of the incident light amount of the reflected light L2 is estimated using the following Formula C.

<Formula C>

$$\text{Incident light amount of reflected light L2} = 10^{(e \cdot \Delta T + f)}$$

e, f: variables determined according to magnitude of disturbance light L3

The upper right of FIG. 9 illustrates a logarithmic graph illustrating a relation between the time difference $\Delta T$ and the incident light amount of the reflected light L2 in the first region E1. In the logarithmic graph, the relation between the time difference $\Delta T$ and the incident light amount of the reflected light L2 is substantially linear, and the time difference $\Delta T$ increases as the incident light amount of the disturbance light L3 decreases (see graphs G1a (with less disturbance light L3) to G1c (with more disturbance light L3)).

When it is determined to be in the non-saturated state (S170: NO), the TOF measurement device 40 determines whether the peak intensity difference between the histogram and the disturbance light L3 is equal to or greater than the reference value (S190). The reference value may be changed as appropriate. When it is determined that the peak intensity difference is equal to or greater than the reference value (S190: YES), the TOF measurement device 40 estimates the peak intensity of the incident light amount of the reflected light L2 based on the peak intensity (SPAD output value) of the histogram and the following logarithmic function (Formula D) (S200). The processing of S200 is an example of second incident light amount estimation processing. Specifically, the peak intensity of the incident light amount of the reflected light L2 is estimated using the following Formula D.

< Formula D>

$$\text{Incident light amount of reflected light} = 10^{(a \times \text{output value from light receiving element} + b)}$$

a, b: coefficient

A middle part of FIG. 9 illustrates a logarithmic graph illustrating a relation between the peak intensity (SPAD output value) of the histogram and the incident light amount of the reflected light L2 in the second region E2. In the logarithmic graph, the relation between the peak intensity of the histogram and the incident light amount of the reflected light L2 is substantially linear, and the slope is gentler as the incident light amount of the disturbance light L3 is larger (see graphs G2a (with less disturbance light L3) to G2c (with more disturbance light L3)). First coefficient correction processing of correcting the coefficient a of the logarithmic function to a smaller value as the incident light amount of the disturbance light L3 increases may be executed.

When it is determined that the peak intensity difference is less than the reference value (S190: NO), the TOF measurement device 40 estimates the peak intensity of the incident light amount of the reflected light L2 based on the peak intensity (SPAD output value) of the histogram and the following real function (Formula E) (S210). The processing of S210 is an example of third incident light amount estimation processing. Specifically, the peak intensity of the incident light amount of the reflected light L2 is estimated using the following Formula E.

<Formula E>

$$\text{Incident light amount of reflected light} = c \times \text{output value from light receiving element} + d$$

c, d: coefficient

A lower part of FIG. 9 illustrates a real graph illustrating a relation between the peak intensity (SPAD output value) of the histogram and the incident light amount of the reflected light L2 in the third region E3. In the real graph, the relation between the peak intensity of the histogram and the incident light amount of the reflected light L2 is substantially linear, and the slope is gentler as the incident light amount of the disturbance light L3 is larger (see graphs G3a (with less disturbance light L3) to G3c (with more disturbance light L3)). Second coefficient correction processing of correcting the coefficient c of the real function to a smaller value as the incident light amount of the disturbance light L3 increases may be executed.

Thereafter, the TOF measurement device 40 estimates the reflectance ρ of the measurement target W based on the peak intensity of the incident light amount of the reflected light L2 (incident light amount $P_{RX}$) estimated in the processing of S180, S200, or S210, the distance (R) measured in S160, and the above Formula B (LiDAR equation) (S220), and returns to S110.

A-4. Estimation Processing of Reflectance of Measurement Target W in Pixel in which Reflected Light L2 is not Detected:

In the measurement processing illustrated in FIG. 3, the reflectance ρ of the measurement target W is estimated using the Formula B (LiDAR equation). However, in the estimation method, it is assumed that the incident light amount of the reflected light L2 can be estimated. On the light receiving surface 32A, there may be a pixel in which the reflected light L2 is detected (hereinafter referred to as "detected pixel") and a pixel in which the reflected light L2 is not detected (hereinafter referred to as "non-detected pixel"). For the detected pixel, the reflectance ρ of the measurement target W can be estimated by the measurement processing in FIG. 3. However, since the incident light amount of the reflected light L2 cannot be estimated for the non-detected pixel, the reflectance ρ of the measurement target W cannot be estimated by the measurement processing in FIG. 3.

Therefore, in the present embodiment, the control circuit 42 estimates the reflectance ρ of the measurement target W for the non-detected pixel based on the reflectance ρ of the measurement target W estimated for the detected pixel and a ratio of the incident light amount of the disturbance light L3 of the non-detected pixel to the detected pixel. It is assumed that the disturbance light L3 is uniformly emitted on the entire light receiving surface 32A, and the incident light amount of the disturbance light L3 on the light receiving surface 32A is irrelevant to the distance to the measurement target W. For example, when the reflectance ρ at the detected pixel is 80% and the ratio of the incident light amount of the disturbance light L3 at the non-detected pixel to the incident light amount of the disturbance light L3 at the detected pixel is 1/2, the reflectance ρ at the non-detected pixel is estimated to be 40% (= 80% × (1/2)).

A-5. Effects of Present Embodiment:

The present inventor has newly found that the relative relation between the first arrival timing T1 and the second arrival timing T2 of the histogram correlates with the peak timing of the incident light amount of the reflected light L2 on the light receiving surface 32A. Therefore, according to the present embodiment, the light receiving timing can also be estimated based on the first arrival timing T1 and the second arrival timing T2 when the incident light amount of the reflected light L2 on the light receiving surface 32A is in the saturated state (see S110 to S150 in FIG. 3).

In addition, the present inventor has newly found that the time difference ΔT between the first arrival timing T1 and the second arrival timing T2 correlates with the peak intensity of the incident light amount of the reflected light L2 on the light receiving surface 32A. Therefore, in the present embodiment, the peak intensity of the incident light amount of the reflected light L2 can also be estimated based on the time difference ΔT of the histogram in the saturated state in which the peak of the histogram cannot be detected (see S180 in FIG. 3).

B. Modification of First Embodiment:

The technique disclosed in the present description is not limited to the above-described embodiment, and can be modified into various forms without departing from the gist thereof, and for example, the following modifications are also possible.

The configuration of the measurement device 10 in the above embodiment is merely an example, and various modifications may be made.

In the flowchart of the measurement processing in the above embodiment, one of the correction processing of the processing of S130 and the processing of S150 may not be executed.

C. Second Embodiment:

C-1. Configuration of Measurement Device 1010:

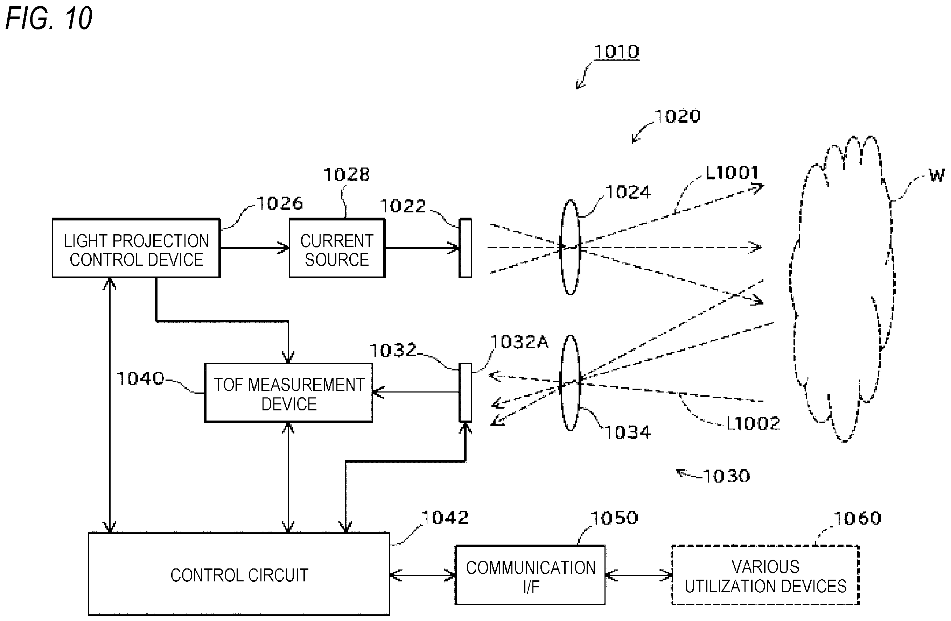

FIG. 10 is a block diagram schematically illustrating a configuration of a measurement device 1010 according to a second embodiment. As illustrated in FIG. 10, the measurement device 1010 includes a light projector 1020 that emits emitted light L1001 (for example, light beam (laser light)) to the measurement target W, and a light receiver 1030 that receives reflected light L1002 (return light) that is the emitted light L1001 reflected by the measurement target W, and functions as a LiDAR. The measurement device 1010 measures a difference (TOF) between a timing at which the light projector 1020 emits the emitted light L1001 and a timing at which the light receiver 1030 receives the reflected light L1002 to acquire information on the measurement target W.

The measurement device 1010 is mounted on, for example, a vehicle on which an AD or an ADAS is mounted (not illustrated). For example, the measurement device 1010 assists detection of an object such as a person or another vehicle during traveling of the vehicle, and provides other devices or users with various types of information useful for ensuring safety of a driver of the vehicle or a person present around the vehicle and reducing damage to the object present around the vehicle during driving of the vehicle.

The light projector 1020 includes a light source 1022, a light projection optical system 1024, a light projection control device 1026, and a current source 1028.

The light source 1022 includes one or a plurality of light emitting elements (not illustrated) or a light emitting source having one or a plurality of light emitting element arrays (for example, light emitting element array in which light emitting elements are arranged linearly (one-dimensionally) or planarly (two-dimensionally)). The light emitting element is, for example, a laser diode, a surface light emitting type laser light emitting element (for example, VCSEL), or a surface light emitting element array (for example, VCSEL array) in which a plurality of surface light emitting elements are one-dimensionally or two-dimensionally arranged on a substrate (semiconductor substrate, ceramic substrate, or the like).

The current source 1028 supplies a current corresponding to a control signal received from the light projection control device 1026 to the light emitting element constituting the light source 1022. The current source 1028 supplies, to the light emitting element, for example, a periodic square wave current for turning on and off the current flowing through the light emitting element.

The light projection control device 1026 controls a current (drive current) supplied from the current source 1028 to the light emitting element by generating a control signal of the current source 1028 and inputting the control signal to the current source 1028. The light projection control device 1026 inputs a signal indicating a timing at which the light emitting element emits light (timing at which light emitting element emits light, hereinafter, referred to as "light projection timing") to a TOF measurement device 1040. For example, the light projection control device 1026 causes the light emitting element to periodically and repeatedly emit light by performing control to periodically and repeatedly turn on and off the current flowing through the light emitting element.

For example, the light projection optical system 1024 adjusts light distribution of the emitted light L1001 by applying an optical action (refraction, scattering, diffraction, or the like) to the light emitted by the light source 1022. The light projection optical system 1024 includes, for example, various lenses such as a collimator lens and optical components such as a reflector (mirror).

The light receiver 1030 includes a light receiving unit 1032 and a light receiving optical system 1034.

The light receiving optical system 1034 condenses, on the light receiving unit 1032, the reflected light L1002, which is the emitted light L1001 from the light projector 1020 reflected by the measurement target W or the like. The light receiving optical system 1034 includes, for example, various lenses such as a condenser lens, various filters such as a wavelength filter, and optical components such as a reflector (mirror).

The light receiving unit 1032 includes a plurality of light receiving elements. The light receiving element is, for example, a photodiode, an SPAD, or a balanced photodetector. The light receiving unit 1032 photoelectrically converts the reflected light L1002 incident from the light receiving optical system 1034 to generate a light receiving signal having a current level or a voltage level corresponding to an intensity of the reflected light L1002. The light receiving unit 1032 inputs, to the TOF measurement device 1040, a signal indicating a timing at which the light receiving element constituting the light receiving unit 1032 receives the reflected light L1002 (hereinafter, referred to as "light receiving timing") or a light receiving signal generated by the light receiving element.

The measurement device 1010 further includes the TOF measurement device 1040, a control circuit 1042, and a communication I/F (inter face) 1050. In the present embodiment, the TOF measurement device 1040 and the control circuit 1042 are examples of a controller.

The TOF measurement device 1040 obtains the TOF based on the signal indicating the light projection timing received from the light projection control device 1026 and the signal indicating the light receiving timing received from the light receiving unit 1032. The TOF measurement device 1040 includes, for example, a time measurement IC equipped with a TDC circuit. The TOF measurement device 1040 inputs, to the control circuit 1042, the obtained TOF and the light receiving signal received from the light receiving unit 1032.

The control circuit 1042 includes a processor (CPU, MPU, ASIC, FPGA, DSP, or the like). The control circuit 1042 generates information used for various measurements such as detection of the measurement target W and distance measurement based on the light receiving signal and the TOF received from the TOF measurement device 1040. The information is, for example, a histogram used in time correlated signal photon counting, a distance to each point of the measurement target W, or point cloud. The control circuit 1042 controls the light projection control device 1026 and the light receiving unit 1032. The control circuit 1042 controls, for example, the light projection control device 1026 and the light receiving unit 1032 to control the light projection timing and the light receiving timing described above such that processing related to generation of the histogram is accelerated or optimized. The information generated by the control circuit 1042 is provided (transmitted) to a device that uses the information (hereinafter referred to as "various utilization devices 1060") via the communication I/F 1050.

The various utilization devices 1060 perform, for example, creation of an environment map by point cloud, or simultaneous localization and mapping (SLAM) using a scan matching algorithm (NDT, ICP, or the like).

C-2. Signal Processing in TOF Measurement Device 1040:

In the present embodiment, the light receiver 1030 (light receiving unit 1032) has a light receiving surface 1032A on which a plurality of light receiving elements are arranged in an array linearly (one-dimensionally) or planarly (two-dimensionally). Hereinafter, a configuration in which the light receiving element is a SPAD as an example of a photon count type light receiving element will be described as an example. The SPAD responds with a predetermined probability (for example, 20%) when a photon is incident, and outputs one pulse when a photon is detected.

In the light receiving unit 1032 using the SPAD, one pixel in an image acquired based on a light receiving signal from the SPAD (hereinafter, referred to as "light receiving image") is defined by "the SPAD unit number M" and the "SPAD integration count U". The SPAD unit number M is the number of SPADs adjacent to one another on the light receiving surface 1032A. For example, in a configuration in which a plurality of SPADs are two-dimensionally arranged on the light receiving surface 1032A, the SPAD unit number M is 9 ($= 3 \times 3$) or 16 ($= 4 \times 4$). As the SPAD unit number M increases, the resolution of the light receiving image decreases. The SPAD integration count U is the number of times the output value of each SPAD is integrated at each predetermined sampling timing. A large SPAD integration count U means that the integration count of the output value of the SPAD is large. As the SPAD integration count U increases, a frame rate of the light receiving image (number of images (frames) constituting moving image per second) decreases. The TOF measurement device 1040 generates a histogram for each pixel based on the output values of the SPADs constituting the pixel.

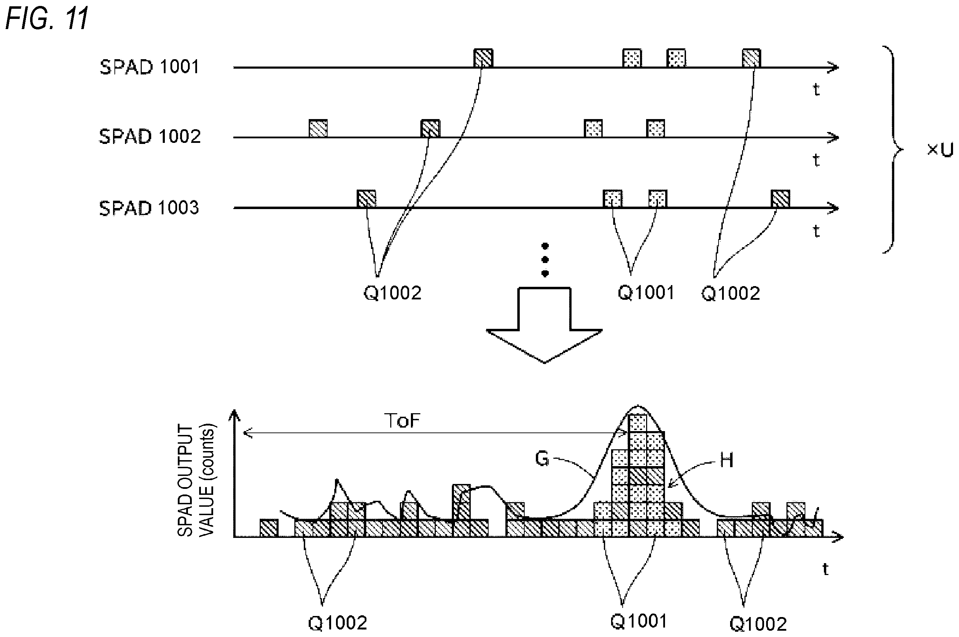

FIG. 11 is a diagram illustrating a relation between the output values of the SPADs constituting one pixel and the histogram. An upper part of FIG. 11 illustrates a temporal change in the output value of each of SPADs (SPADs 1001 to 1003). A lower part of FIG. 11 illustrates the graph G indicating a temporal change in an incident light amount (light receiving intensity, irradiation intensity) per unit area of light (including reflected light L1002 and disturbance light (background light) L1003) emitted to one pixel of the light receiving surface 1032A, and the histogram H generated by the TOF measurement device 1040. Q1001 in FIG. 11 means one pulse output in a case where each SPAD detects a photon when the reflected light L1002 is incident, and Q1002 means one pulse output in a case where each SPAD detects a photon when only the disturbance light L1003 is incident without the reflected light L1002 being incident.

In the graph G, a waveform indicating a relatively high peak intensity is a waveform when the reflected light L1002 is incident on the light receiving surface 1032A, and a waveform indicating a relatively low peak intensity is a waveform when only the disturbance light L1003 is incident on the light receiving surface 1032A without the reflected light L1002 being incident. The incident light amount of the reflected light L1002 is higher than the incident light amount of the disturbance light L1003. Therefore, as illustrated in the histogram **H,** the detection number of photons in one pixel statistically increases when the reflected light L1002 is incident on the light receiving surface 1032A, and the detection number of photons in one pixel statistically decreases when only the disturbance light L1003 is incident on the light receiving surface 1032A without the reflected light L1002 being incident. The TOF measurement device 1040 determines the light receiving timing based on a timing corresponding to the waveform indicating a relatively high peak in histogram H.

C-3. Measurement Processing:

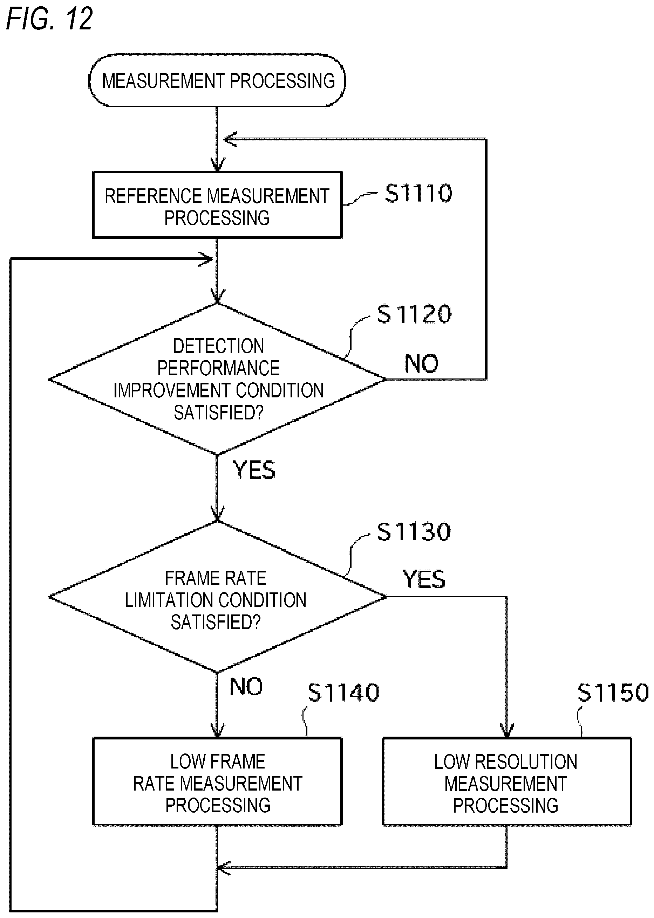

FIG. 12 is a flowchart illustrating measurement processing to be executed by the TOF measurement device 1040 and the control circuit 1042. In the measurement processing, the TOF can be measured while changing at least one of the SPAD unit number M constituting one pixel and the SPAD integration count U.

Reference Measurement Processing

As illustrated in FIG. 12, the TOF measurement device 1040 executes reference measurement processing at the beginning of the measurement (S1110). In the reference measurement processing, the output values of the plurality of light receiving elements arranged on the entire light receiving surface 1032A are acquired in a reference unit in which the SPAD unit number M and the SPAD integration count U are respectively set to predetermined values (initial values), and the distance to the measurement target W is measured based on the obtained output result. The reference unit is an example of a first acquisition unit, and the reference measurement processing is an example of first measurement processing.
Next, the TOF measurement device 1040 determines whether a detection performance improvement condition is satisfied (S1120). The detection performance means detection accuracy of presence or absence of the reflected light L1002 in one pixel. As the SPAD unit number M constituting one pixel increases, the output values of the SPADs that detect photons when the reflected light L1002 is emitted to the light receiving surface 1032A are superimposed in an area manner, and thus the peak intensity of the histogram becomes relatively high. As a result, the detection performance for the reflected light L1002 is improved. In addition, as the SPAD integration count U constituting one pixel increases, the output values of the SPADs that detect photons when the reflected light L1002 is emitted to the light receiving surface 1032A is temporally superimposed, and thus the peak intensity of the histogram becomes relatively high. As a result, the detection performance for the reflected light L1002 is improved. The detection performance improvement condition is an example of a switching condition.
Examples of the detection performance improvement condition include the following.

(1) A measurement result of the reference measurement processing indicates a predetermined change pattern (for example, change pattern indicating detection of measurement target W, or change pattern indicating detection of abnormal image).
(2) A relative speed between the measurement device 1010 and the measurement target W (for example, moving speed of vehicle on which measurement device 1010 is mounted) is equal to or higher than a predetermined speed or equal to or lower than the predetermined speed.
(3) A signal indicating an instruction to improve the detection performance is received from the outside (for example, control unit of vehicle on which measurement device 1010 is mounted).

When it is determined that the detection performance improvement condition is not satisfied (S1120: NO), the TOF measurement device 1040 continues the reference measurement processing. On the other hand, when it is determined that the detection performance improvement condition is satisfied (S1120: YES), the TOF measurement device 1040 determines whether a frame rate limitation condition is satisfied (S1130). The frame rate limitation condition is a condition for limiting a decrease in the frame rate, and examples thereof include the following.

(1) The relative speed between the measurement device 1010 and the measurement target W (for example, moving speed of vehicle on which measurement device 1010 is mounted) is equal to or higher than a predetermined speed.
(2) The current frame rate reaches a predetermined lower limit.

Low Frame Rate Measurement Processing

When it is determined that the frame rate limitation condition is not satisfied (S1130: NO), the TOF measurement device 1040 executes low frame rate measurement processing (S1140). **In** the low frame rate measurement processing, the output values of the plurality of SPADs arranged on the entire light receiving surface 1032A are acquired in a low frame rate unit, and the distance to the measurement target W is measured based on the obtained output results. In the low frame rate unit, the SPAD unit number M is the same as that in the reference unit, and the SPAD integration count U is large. The low frame rate unit is an example of a second acquisition unit, and the low frame rate measurement processing is an example of second measurement processing.

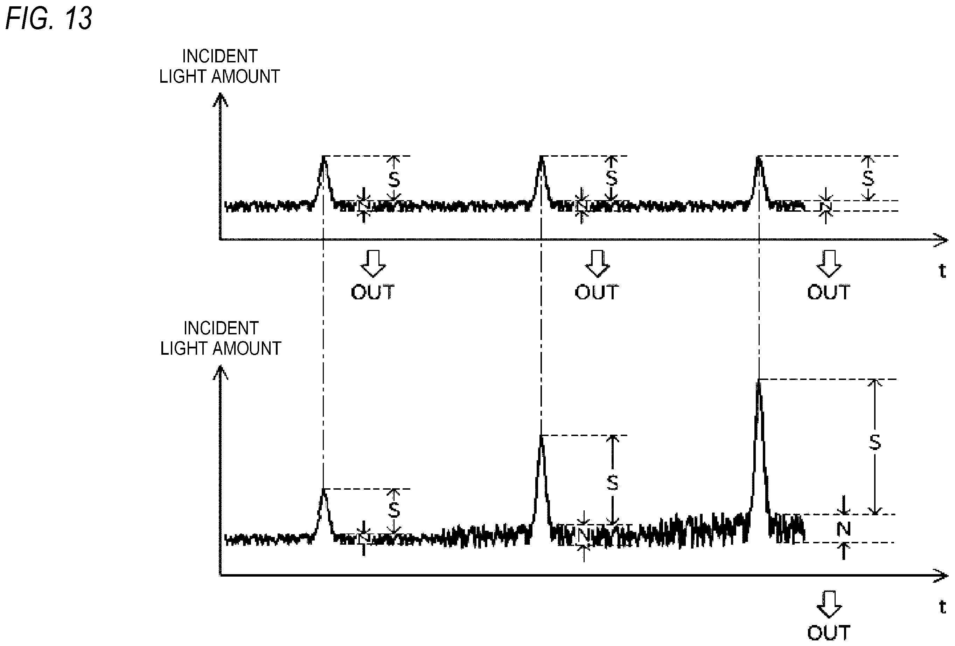

FIG. 13 is a diagram illustrating a difference in the SPAD integration count U between the reference measurement processing and the low frame rate measurement processing. Since the SPAD unit number M is the same in the reference measurement processing and the low frame rate measurement processing, a histogram in which the output values of SPADs of the SPAD unit number M are superimposed in an area manner (hereinafter, referred to as "unit histogram") is generated for each sampling timing (sampling period).

Here, the SPAD integration count U in the reference measurement processing is set to, for example, "1". In this case, as illustrated in an upper part of FIG. 13, the TOF measurement device 1040 outputs a unit histogram corresponding to the incident light amount on the light receiving surface 1032A as data of one pixel at each sampling timing, and the control circuit 1042 determines presence or absence of the reflected light L1002 based on comparison between the unit histogram and a determination threshold. Since the signal waveform corresponding to the reflected light L1002 is relatively small at one sampling timing, the SN ratio is low. The SN ratio here is a magnification of a peak value S of the signal corresponding to the reflected light L1002 to a peak value N of the signal corresponding to the disturbance light L1003. In this way, in the reference measurement processing, since the SN ratio is low and the peak intensity of the unit histogram constituting one pixel is relatively low accordingly, the detection performance for the reflected light L1002 is relatively low.

On the other hand, the SPAD integration count U in the low frame rate measurement processing is, for example, "3". In this case, as illustrated in a lower part of FIG. 13, the TOF measurement device 1040 generates a histogram in which unit histograms generated at three sampling timings are superimposed (hereinafter, referred to as "superimposed histogram"), and outputs the superimposed histogram as data of one pixel. The control circuit 1042 determines presence or absence of the reflected light L1002 based on comparison between the superimposed histogram and a determination threshold. Since the signal waveform corresponding to the reflected light L1002 superimposed at three sampling timings is relatively large, the SN ratio is high. In this way, in the low frame rate measurement processing, since the SN ratio is high and the peak intensity of the superimposed histogram constituting one pixel is relatively high accordingly, the detection performance for the reflected light L1002 is relatively high. However, in the low frame rate measurement processing, the frame rate of the light receiving image is lower than that in the reference measurement processing.

For example, in a case where the vehicle on which the measurement device 1010 is mounted moves at a low speed (moving speed is less than predetermined speed), the possibility of overlooking an image is also relatively low when the frame rate is lowered, and thus it is preferable to perform the low frame rate measurement processing, thereby improving the detection performance for the reflected light L1002. **In** the low frame rate measurement processing, the resolution of the light receiving image may be increased by reducing the SPAD unit number M with respect to the reference measurement processing. **In** addition, the SPAD integration count U of each of the reference measurement processing and the low frame rate measurement processing is not limited to the count in the example of FIG. 13, and may be appropriately changed.

Low Resolution Measurement Processing

When it is determined that the frame rate limitation condition is satisfied (S1130: YES), the TOF measurement device 1040 executes low resolution measurement processing (S1150). **In** the low resolution measurement processing, the output values of the plurality of light receiving elements arranged on the entire light receiving surface 1032A are acquired in a low resolution unit, and the distance to the measurement target W is measured based on the obtained output result. **In** the low resolution unit, the SPAD unit number M is larger than that in the reference unit, and the SPAD integration count U is the same as that in the reference unit. The low resolution unit is an example of a second acquisition unit, and the low resolution measurement processing is an example of second measurement processing.

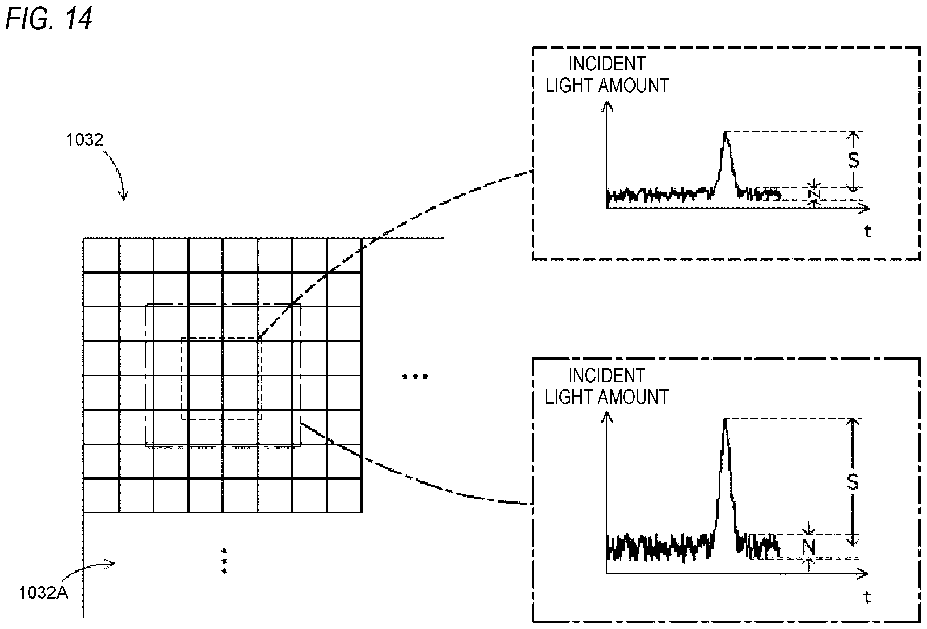

FIG. 14 is a diagram illustrating a difference in the SPAD unit number M between the reference measurement processing and the low resolution measurement processing. Since the SPAD integration count U is the same in the reference measurement processing and the low resolution measurement processing, the frame rate is the same.

Here, the SPAD unit number M in the reference measurement processing is, for example, "2 × 2". In this case, as illustrated in the upper right of FIG. 14, the TOF measurement device 1040 outputs a unit histogram corresponding to the incident light amount in the SPAD arrangement area of "2 × 2" as data of one pixel, and the control circuit 1042 determines presence or absence of the reflected light L1002 based on comparison between the unit histogram and a determination threshold. Since the signal waveform corresponding to the reflected light L1002 is relatively small in the SPAD arrangement area of "2 × 2", the SN ratio is low. In this way, in the reference measurement processing, since the SN ratio is low and the peak intensity of the unit histogram constituting one pixel is relatively low accordingly, the detection performance for the reflected light L1002 is relatively low.

On the other hand, the SPAD unit number M in the low resolution measurement processing is, for example, "4 × 4". In this case, as illustrated in the lower right of FIG. 14, the TOF measurement device 1040 outputs a unit histogram corresponding to the incident light amount in the SPAD arrangement area of "4 × 4" as data of one pixel, and the control circuit 1042 determines presence or absence of the reflected light L1002 based on comparison between the unit histogram and a determination threshold. Since the signal waveform corresponding to the reflected light L1002 is relatively large in the SPAD arrangement area of "4×4", the SN ratio is low. In this way, in the low resolution measurement processing, since the SN ratio is high and the peak intensity of the unit histogram constituting one pixel is relatively high accordingly, the detection performance for the reflected light L1002 is relatively high. However, in the low resolution measurement processing, the resolution of the light receiving image is lower than that in the reference measurement processing.

For example, in a case where the vehicle on which the measurement device 1010 is mounted moves at a high speed (moving speed is equal to or higher than predetermined speed), when the frame rate is increased, the possibility of overlooking an image is high, and thus it is not preferable to perform the low frame rate measurement processing. In this case, it is preferable to perform the low resolution measurement processing, thereby improving the detection performance for the reflected light L1002. In the low resolution measurement processing, the frame rate of the light receiving image may be increased by reducing the SPAD integration count U with respect to the reference measurement processing. In addition, the SPAD unit number M in each of the reference measurement processing and the low resolution measurement processing is not limited to the example illustrated in FIG. 14 and may be changed as appropriate. The TOF measurement device 1040 executes the low frame rate measurement processing or the low resolution measurement processing for a predetermined period of time, for example, and then returns to S1120.

C-4. Generation of Determination Threshold:

The determination threshold is preferably corrected as appropriate according to an average value of the histogram. Here, when the presence or absence of the reflected light L1002 is determined based on the comparison between the superimposed histogram and the determination threshold, for example, there is a method according to a comparative example as follows as a method for generating the determination threshold. There is a method of calculating an average value of a unit histogram for each sampling timing, adding the average values of the plurality of unit histograms, and correcting the determination threshold according to a total value of the average values. In this method, a rounding error associated with rounding processing occurs each time the average value of the unit histogram is calculated, and average values of a plurality of unit histograms of including the rounding error are added up. In short, the total value of the average values includes a plurality of rounding errors. Therefore, there is a possibility that the determination threshold cannot be accurately corrected with the total value of the average values including the plurality of rounding errors.

On the other hand, in the present embodiment, a plurality of unit histograms are integrated before calculating the average value, and the average value of the superimposed histogram obtained by the integration is used to correct the determination threshold. In the method according to the present embodiment, the number of times of occurrence of the rounding error is only once in the calculation on the average value used for correcting the determination threshold. Therefore, in the method according to the present embodiment, the influence of the rounding error is reduced as compared with the method according to the comparative example, and the determination threshold can be accurately corrected.

In the present embodiment, it is preferable to calculate the average value used for correcting the determination threshold based on the histogram generated when the light receiving surface 1032A is not irradiated with the reflected light L1002 and only irradiated with the disturbance light L1003. The fluctuation of the histogram is mainly due to the fluctuation of the disturbance light L1003. Therefore, with the method according to the present embodiment, it is possible to eliminate the influence of the reflected light L1002 and accurately correct the determination threshold according to the fluctuation of the disturbance light L1003, as compared with a case where the average value is calculated based on the histogram generated when the light receiving surface 1032A is irradiated with the reflected light L1002.

C-5. Effects of Present Embodiment:

As described above, the measurement device 1010 according to the present embodiment can change the detection performance of the reflected light L1002, the resolution, and the frame rate by changing at least one of the SPAD unit number M constituting one pixel and the SPAD integration count U constituting one pixel, for example. Accordingly, it is possible to measure the distance to the measurement target W while changing the detection performance or the like of the reflected light L1002.

D. Modification of Second Embodiment:

The technique disclosed in the present description is not limited to the above-described embodiment, and can be modified into various forms without departing from the gist thereof, and for example, the following modifications are also possible.

The configuration of the measurement device 1010 in the above embodiment is merely an example, and various modifications may be made. For example, in the above embodiment, the SPAD is exemplified as the light receiving element, and without being limited thereto, may be an analog output type light receiving element.

In the above embodiment, the detection performance improvement condition is exemplified as the switching condition, and without being limited thereto, the switching condition may be another condition such as reception of a switching instruction signal from the outside. In the flowchart of the measurement processing in the above embodiment, the processing of S1140 or the processing of S1150 may be executed without the determination in S1130. In the second measurement processing, the number of light receiving elements may be larger and the integration count of the output values of the light receiving elements may be smaller than those in the first measurement processing, or the number of light receiving elements may be smaller and the integration count of the output values of the light receiving elements may be larger than those in the first measurement processing.

In the above embodiment, the second measurement processing (low frame rate measurement processing, low resolution measurement processing) is performed on the entire light receiving surface 1032A, but the second measurement processing may be performed on only a partial region of the light receiving surface 1032A. For example, in the flowchart of the measurement processing in the above embodiment, in a case where the detection performance improvement condition is satisfied and a region limitation condition is satisfied, the low resolution measurement processing may be executed on a specific region which is a part of the light receiving surface 1032A, and the reference measurement processing may be continued on a region other than the specific region in the light receiving surface 1032A. The region limitation condition is, for example, that a signal instructing region limitation is received from the outside, or that a predetermined change pattern (for example, change pattern indicating detection of measurement target W or change pattern indicating detection of abnormal image) appears in an image acquired during the reference measurement processing (that measurement target W or abnormal image is detected).

E. Third Embodiment:

E-1. Configuration of Measurement Device 2010:

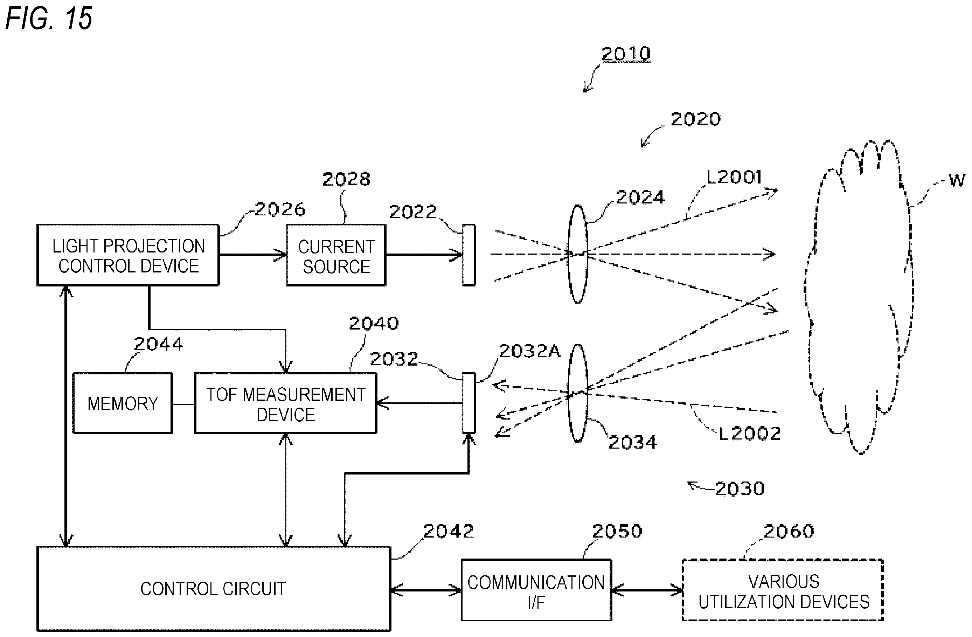

FIG. 15 is a block diagram schematically illustrating a configuration of a measurement device 2010 according to a third embodiment. As illustrated in FIG. 15, the measurement device 2010 includes a light projector 2020 that emits emitted light L2001 (for example, light beam (laser light)) to the measurement target W, and a light receiver 2030 that receives reflected light L2002 (return light) that is the emitted light L2001 reflected by the measurement target W, and functions as a LiDAR. The measurement device 2010 measures a difference (TOF) between a timing at which the light projector 2020 emits the emitted light L2001 and a timing at which the light receiver 2030 receives the reflected light L2002 to acquire information on the measurement target W.

The measurement device 2010 is mounted on, for example, a vehicle on which an AD or an ADAS is mounted (not illustrated). For example, the measurement device 2010 assists detection of an object such as a person or another vehicle during traveling of the vehicle, and provides other devices or users with various types of information useful for ensuring safety of a driver of the vehicle or a person present around the vehicle and reducing damage to the object present around the vehicle during driving of the vehicle.

The light projector 2020 includes a light source 2022, a light projection optical system 2024, a light projection control device 2026, and a current source 2028.

The light source 2022 includes one or a plurality of light emitting elements (not illustrated) or a light emitting source having one or a plurality of light emitting element arrays (for example, light emitting element array in which light emitting elements are arranged linearly (one-dimensionally) or planarly (two-dimensionally)). The light emitting element is, for example, a laser diode, a surface light emitting type laser light emitting element (for example, VCSEL), or a surface light emitting element array (for example, VCSEL array) in which a plurality of surface light emitting elements are one-dimensionally or two-dimensionally arranged on a substrate (semiconductor substrate, ceramic substrate, or the like).

The current source 2028 supplies a current corresponding to a control signal received from the light projection control device 2026 to the light emitting element constituting the light source 2022. The current source 2028 supplies, to the light emitting element, for example, a periodic square wave current for turning on and off the current flowing through the light emitting element.

The light projection control device 2026 controls a current (drive current) supplied from the current source 2028 to the light emitting element by generating a control signal of the current source 2028 and inputting the control signal to the current source 2028. The light projection control device 2026 inputs a signal indicating a timing at which the light emitting element emits light (timing at which light emitting element emits light, hereinafter, referred to as "light projection timing") to a TOF measurement device 2040. For example, the light projection control device 2026 causes the light emitting element to periodically and repeatedly emit light by performing control to periodically and repeatedly turn on and off the current flowing through the light emitting element.

For example, the light projection optical system 2024 adjusts light distribution of the emitted light L2001 by applying an optical action (refraction, scattering, diffraction, or the like) to the light emitted by the light source 2022. The light projection optical system 2024 includes, for example, various lenses such as a collimator lens and optical components such as a reflector (mirror).

The light receiver 2030 includes a light receiving unit 2032 and a light receiving optical system 2034.

The light receiving optical system 2034 condenses, on the light receiving unit 2032, the reflected light L2002, which is the emitted light L2001 from the light projector 2020 reflected by the measurement target W or the like. The light receiving optical system 2034 includes, for example, various lenses such as a condenser lens, various filters such as a wavelength filter, and optical components such as a reflector (mirror).

The light receiving unit 2032 includes a plurality of light receiving elements. The light receiving unit 2032 photoelectrically converts the reflected light L2002 incident from the light receiving optical system 2034 to generate a light receiving signal having a current level or a voltage level corresponding to an intensity of the reflected light L2002. The light receiving unit 2032 inputs, to the TOF measurement device 2040, a signal indicating a timing at which the light receiving element constituting the light receiving unit 2032 receives the reflected light L2002 (hereinafter, referred to as "light receiving timing") or a light receiving signal generated by the light receiving element.

The measurement device 2010 further includes the TOF measurement device 2040, a control circuit 2042, and a communication I/F (interface) 2050. In the present embodiment, the TOF measurement device 2040 and the control circuit 2042 are examples of a controller.

The TOF measurement device 2040 obtains the TOF based on the signal indicating the light projection timing received from the light projection control device 2026 and the signal indicating the light receiving timing received from the light receiving unit 2032. The TOF measurement device 2040 includes, for example, a time measurement integrated circuit (IC) equipped with a time to digital converter (TDC) circuit. The TOF measurement device 2040 inputs, to the control circuit 2042, the obtained TOF and the light receiving signal received from the light receiving unit 2032.

The control circuit 2042 includes a processor (CPU, MPU, ASIC, FPGA, DSP, or the like). The control circuit 2042 generates information used for various measurements such as detection of the measurement target W and distance measurement based on the light receiving signal and the TOF received from the TOF measurement device 2040. The information is, for example, a histogram used in time correlated signal photon counting, a distance to each point of the measurement target W, or point cloud. The control circuit 2042 controls the light projection control device 2026 and the light receiving unit 2032. The control circuit 2042 controls, for example, the light projection control device 2026 and the light receiving unit 2032 to control the light projection timing and the light receiving timing described above such that processing related to generation of the histogram is accelerated or optimized. The information generated by the control circuit 2042 is provided (transmitted) to a device that uses the information (hereinafter referred to as "various utilization devices 2060") via the communication I/F 2050.

The various utilization devices 2060 perform, for example, creation of an environment map by point cloud, or simultaneous localization and mapping (SLAM) using a scan matching algorithm (NDT, ICP, or the like).

E-2. Signal Processing in TOF Measurement Device 2040:

In the present embodiment, the light receiver 2030 (light receiving unit 2032) has a light receiving surface 2032A on which a plurality of light receiving elements are arranged in an array linearly (one-dimensionally) or planarly (two-dimensionally). Hereinafter, a configuration in which the light receiving element is a SPAD as an example of a photon count type light receiving element will be described as an example. The SPAD responds with a predetermined probability (for example, 20%) when a photon is incident, and outputs one pulse when a photon is detected.

In the light receiving unit 2032 using the SPAD, one pixel in an image acquired based on a light receiving signal from the SPAD (hereinafter, referred to as "light receiving image") is defined by "the SPAD unit number M" and the "SPAD integration count U". The SPAD unit number M is the number of SPADs adjacent to one another on the light receiving surface 2032A. For example, in a configuration in which a plurality of SPADs are two-dimensionally arranged on the light receiving surface 2032A, the SPAD unit number M is 9 (= 3 × 3) or 16 (= 4 × 4). As the SPAD unit number M increases, the resolution of the light receiving image decreases. The SPAD integration count U is the number of times the output value of each SPAD is integrated at each predetermined sampling timing. A large SPAD integration count U means that the integration time of the output value of SPAD is long. As the SPAD integration count U increases, a frame rate of the light receiving image (number of images (frames) constituting moving image per second) decreases. The TOF measurement device 2040 generates a histogram for each pixel based on the output values of the SPADs constituting the pixel.

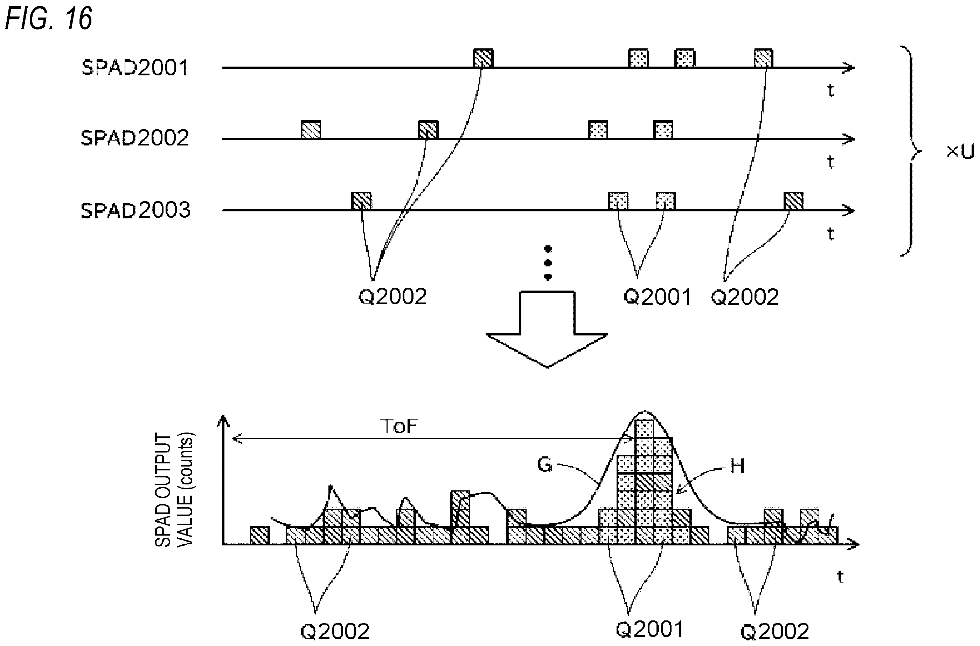

FIG. 16 is a diagram illustrating a relation between the output values of the SPADs constituting one pixel and the histogram. An upper part of FIG. 16 illustrates temporal changes in the output values of the respective SPADs (SPADs 2001 to 2003). A lower part of FIG. 16 illustrates the graph G indicating a temporal change in an incident light amount (light receiving intensity, irradiation intensity) per unit area of light (including reflected light L2002 and disturbance light (background light) L2003) emitted to one pixel of the light receiving surface 2032A, and the histogram H generated by the TOF measurement device 2040. Q2001 in FIG. 16 means one pulse output in a case where the SPAD detects a photon when the reflected light L2002 is incident, and Q2002 means one pulse output in a case where the SPAD detects a photon when only disturbance light L2003 is incident without the reflected light L2002 being incident.

In the graph G, a waveform indicating a relatively high peak intensity is a waveform when the reflected light L2002 is incident on the light receiving surface 2032A, and a waveform indicating a relatively low peak intensity is a waveform when only the disturbance light L2003 is incident on the light receiving surface 2032A without the reflected light L2002 being incident. The incident light amount of the reflected light L2002 is higher than the incident light amount of the disturbance light L2003. Therefore, as illustrated in the histogram **H,** the detection number of photons in one pixel statistically increases when the reflected light L2002 is incident on the light receiving surface 2032A, and the detection number of photons in one pixel statistically decreases when only the disturbance light L2003 is incident on the light receiving surface 2032A without the reflected light L2002 being incident. The TOF measurement device 2040 determines the light receiving timing based on a timing corresponding to the waveform indicating a relatively high peak in histogram H.

E-3. Memory Processing:

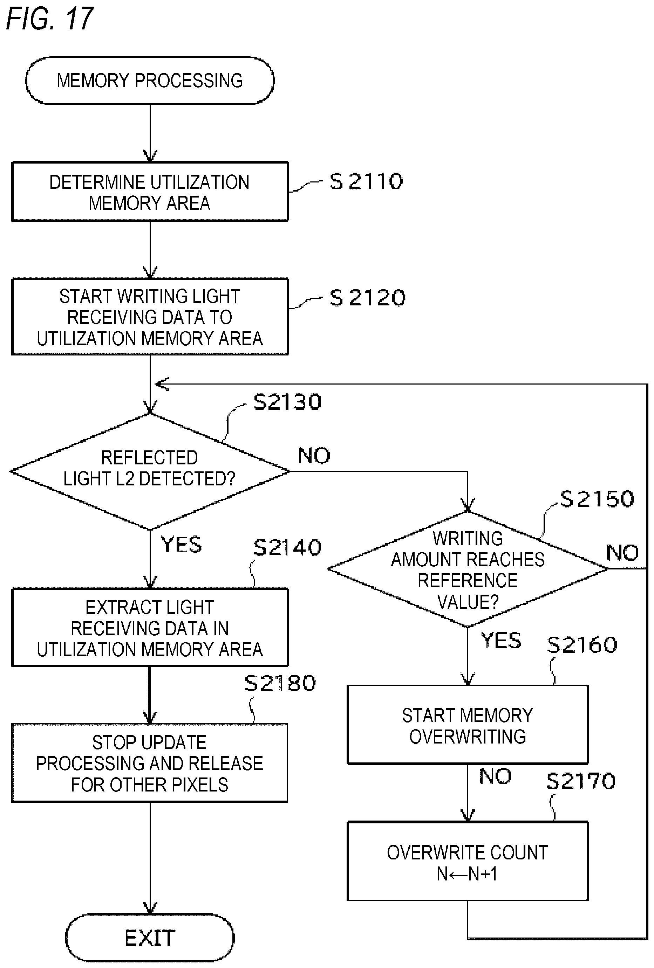

FIG. 17 is a flowchart illustrating a part of the memory processing. The memory processing is processing for measuring the distance to the measurement target W while reducing the memory capacity for storing light receiving data. The TOF measurement device 2040 uses a memory 2044 to store light receiving data (output values) output from the plurality of SPADs.

As illustrated in FIG. 17, the TOF measurement device 2040 determines a utilization memory area (S2110). The utilization memory area is an area used to store the light receiving data in a memory area of the memory 2044, and is determined by a reference value. The reference value is an upper limit value of the utilization memory area (utilization memory capacity) in the memory area of the memory 2044. The utilization memory area can be changed by changing the reference value (example of reference value changing processing). The reference value may be set to a value corresponding to the entire memory area of the memory 2044 or a value corresponding to a part of the memory area of the memory 2044.

Next, the TOF measurement device 2040 starts update processing with the light projection timing of the light projector 2020 as a trigger. In the update processing, the TOF measurement device 2040 repeatedly executes an update operation of writing the light receiving data output from the plurality of SPADs in the utilization memory area of the memory 2044 after the light projection timing of the light projector 2020, and overwriting the utilization memory area with the light receiving data output from the plurality of SPADs after a writing amount of the light receiving data reaches the reference value.

Specifically, the TOF measurement device 2040 first starts processing of writing the light receiving data (histogram) output from the plurality of SPADs in the utilization memory area of the memory 2044 (S2120). Next, the TOF measurement device 2040 determines whether the reflected light L2002 is detected based on the light receiving data (histogram) written in the utilization memory area (S2130). Specifically, the TOF measurement device 2040 compares the light receiving data (histogram) written in the utilization memory area with a signal detection threshold to determine whether reflected light receiving data which is the light receiving data corresponding to the reflected light L2002 is included.

When it is determined that the reflected light L2002 is not detected (S2130: NO), the TOF measurement device 2040 determines whether the writing amount of the light receiving data reaches the reference value (S2150). When it is determined that the writing amount of the light receiving data does not reach the reference value (S2150: NO), the process returns to S2130, and the TOF measurement device 2040 continues the writing of the light receiving data to the utilization memory area. On the other hand, when it is determined that the writing amount of the light receiving data reaches the reference value (S2150: YES), the TOF measurement device 2040 starts processing of overwriting the utilization memory area with the light receiving data output from the plurality of SPADs (S2160). In short, since a light receiving data group (histogram) not including the reflected light receiving data is basically not used for measuring the distance to the measurement target W, there is no problem even when the data is lost by overwriting. After the start of the overwrite processing, the TOF measurement device 2040 adds 1 to the overwrite count N (S2170) and returns to S2130. That is, the TOF measurement device 2040 counts the overwrite count.

On the other hand, when it is determined that the reflected light L2002 is detected (S2130: YES), the TOF measurement device 2040 duplicates and extracts the light receiving data group (histogram) included in the reflected light receiving data and outputs the light receiving data group to the control circuit 2042 (S2140), and the control circuit 2042 measures the distance to the measurement target W based on the extracted light receiving data group and the overwrite count N.

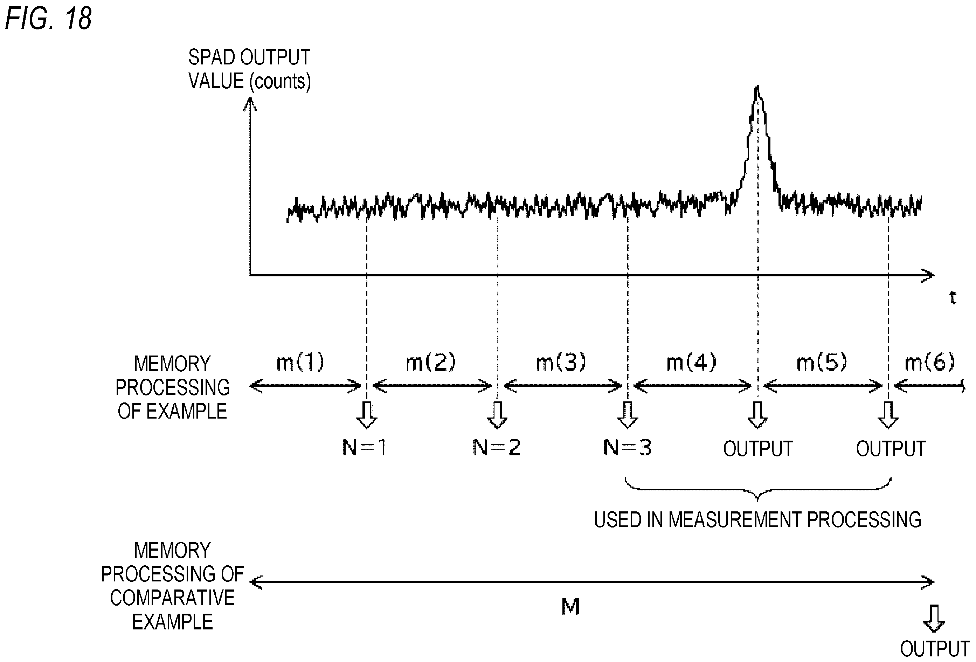

FIG. 18 is a diagram illustrating memory processing of an example and a comparative example. The memory processing of the comparative example is processing of continuously writing all of the light receiving data output from the plurality of SPADs in the memory without overwriting until the reflected light L2002 is detected. For example, in order to allow measurement on the distance to the measurement target W separated by 200 m at the maximum, a large-capacity memory capacity M capable of storing all of the light receiving data group corresponding to an assumed time until the light is emitted from the light projector 2020, reflected by the measurement target W separated by 200 m at the maximum, and returned to the light receiver 2030 is required. Therefore, it is necessary to secure a memory area corresponding to the memory capacity M in the memory 2044.

On the other hand, in the memory processing of the example, the light receiving data output from the plurality of SPADs is written in the utilization memory area having a memory capacity m (K) smaller than the memory capacity M, and when the writing amount of the light receiving data reaches an upper limit of the memory capacity m (K), the utilization memory area is overwritten. In the example of FIG. 18, since the reflected light receiving data exceeding the signal detection threshold is included during third and fourth overwriting processing, third and fourth light receiving data groups are output to the control circuit 2042. Therefore, in the memory processing of the example, it is possible to measure the distance to the measurement target W separated by 200 m at the maximum when a memory area corresponding to the memory capacity m (K) is secured in the memory 2044.

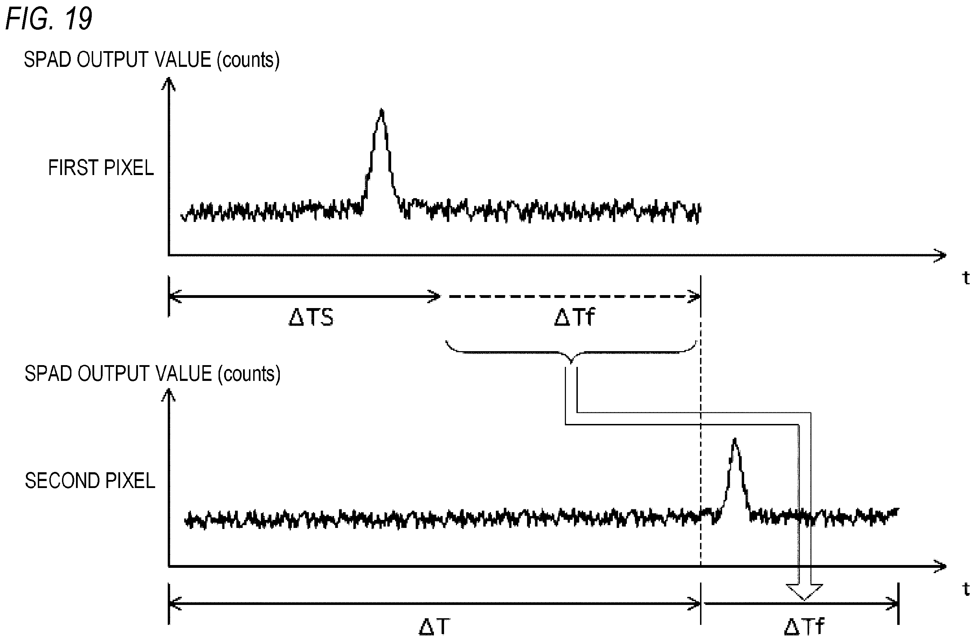

After the output processing (S2140) of the light receiving data group included in the reflected light receiving data, the TOF measurement device 2040 stops the update processing, releases the utilization memory area for the memory processing for other pixels (S2180), and ends the memory processing. FIG. 19 is a diagram illustrating memory processing of a first pixel and a second pixel. As illustrated in FIG. 19, for the first pixel, when the reflected light L2002 is detected in a relatively short period ∆TS and the update processing is stopped, the utilization memory area corresponding to the first pixel is not used in remaining time ∆tf. Therefore, the utilization memory area for the first pixel is released for the update processing in the second pixel. Accordingly, since the utilization memory area is expanded for the second pixel, the time until waiting for the detection of the reflected light L2002 after the light projection timing is prolonged, and the distance to the measurement target W farther away may be measured.

E-4. Effects of Present Embodiment:

As described above, with the measurement device 2010 according to the present embodiment, it is possible to measure the distance to the measurement target W while reducing the memory capacity for storing the light receiving data, as compared with the configuration in which the light receiving data corresponding to the assumed time until the light is emitted from the light projector 2020, reflected by the measurement target W, and returned to the light receiver 2030 is written in the memory.

F. Modification of Third Embodiment:

The technique disclosed in the present description is not limited to the above-described embodiment, and can be modified into various forms without departing from the gist thereof, and for example, the following modifications are also possible.

The configuration of the measurement device 2010 in the above embodiment is merely an example, and various modifications may be made.

In the flowchart of the measurement processing in the above embodiment, one of the processing of S2110 and the processing of S2180 may not be executed.

G. Fourth Embodiment:

G-1. Configuration of Measurement Device 3010:

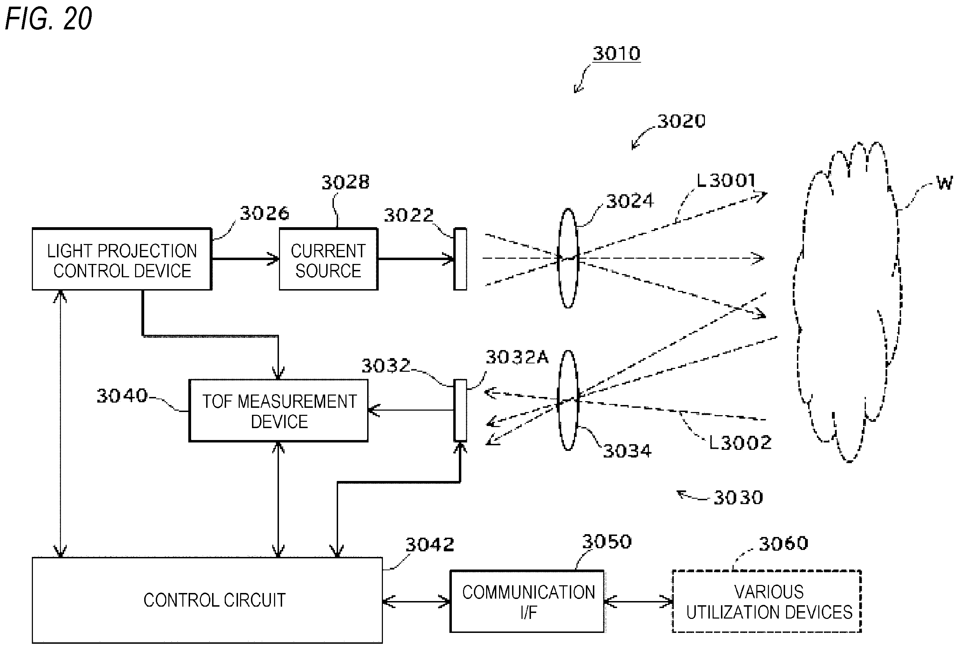

FIG. 20 is a block diagram schematically illustrating a configuration of a measurement device 3010 according to a fourth embodiment. As illustrated in FIG. 20, the measurement device 3010 includes a light projector 3020 that emits emitted light L3001 (for example, light beam (laser light)) to the measurement target W, and a light receiver 3030 that receives reflected light L3002 (return light) that is the emitted light L3001 reflected by the measurement target W, and functions as a LiDAR. The measurement device 3010 measures a difference (TOF) between a timing at which the light projector 3020 emits the emitted light L3001 and a timing at which the light receiver 3030 receives the reflected light L3002 to acquire information on the measurement target W.

The measurement device 3010 is mounted on, for example, a vehicle on which an AD or an ADAS is mounted (not illustrated). For example, the measurement device 3010 assists detection of an object such as a person or another vehicle during traveling of the vehicle, and provides other devices or users with various types of information useful for ensuring safety of a driver of the vehicle or a person present around the vehicle and reducing damage to the object present around the vehicle during driving of the vehicle.

The light projector 3020 includes a light source 3022, a light projection optical system 3024, a light projection control device 3026, and a current source 3028.

The light source 3022 includes one or a plurality of light emitting elements (not illustrated) or a light emitting source having one or a plurality of light emitting element arrays (for example, light emitting element array in which light emitting elements are arranged linearly (one-dimensionally) or planarly (two-dimensionally)). The light emitting element is, for example, a laser diode, a surface light emitting type laser light emitting element (for example, VCSEL), or a surface light emitting element array (for example, VCSEL array) in which a plurality of surface light emitting elements are one-dimensionally or two-dimensionally arranged on a substrate (semiconductor substrate, ceramic substrate, or the like).

The current source 3028 supplies a current corresponding to a control signal received from the light projection control device 3026 to the light emitting element constituting the light source 3022. The current source 3028 supplies, to the light emitting element, for example, a periodic square wave current for turning on and off the current flowing through the light emitting element.

The light projection control device 3026 controls a current (drive current) supplied from the current source 3028 to the light emitting element by generating a control signal of the current source 3028 and inputting the control signal to the current source 3028. The light projection control device 3026 inputs a signal indicating a timing at which the light emitting element emits light (timing at which light emitting element emits light, hereinafter, referred to as "light projection timing") to a TOF measurement device 3040. For example, the light projection control device 3026 causes the light emitting element to periodically and repeatedly emit light by performing control to periodically and repeatedly turn on and off the current flowing through the light emitting element.

For example, the light projection optical system 3024 adjusts light distribution of the emitted light L3001 by applying an optical action (refraction, scattering, diffraction, or the like) to the light emitted by the light source 3022. The light projection optical system 3024 includes, for example, various lenses such as a collimator lens and optical components such as a reflector (mirror).

The light receiver 3030 includes a light receiving unit 3032 and a light receiving optical system 3034.

The light receiving optical system 3034 condenses, on the light receiving unit 3032, the reflected light L3002, which is the emitted light L3001 from the light projector 3020 reflected by the measurement target W or the like. The light receiving optical system 3034 includes, for example, various lenses such as a condenser lens, various filters such as a wavelength filter, and optical components such as a reflector (mirror).

The light receiving unit 3032 includes a plurality of light receiving elements. The light receiving unit 3032 photoelectrically converts the reflected light L3002 incident from the light receiving optical system 3034 to generate a light receiving signal having a current level or a voltage level corresponding to an intensity of the reflected light L3002. The light receiving unit 3032 inputs, to the TOF measurement device 3040, a signal indicating a timing at which the light receiving element constituting the light receiving unit 3032 receives the reflected light L3002 (hereinafter, referred to as "light receiving timing") or a light receiving signal generated by the light receiving element.

The measurement device 3010 further includes the TOF measurement device 3040, a control circuit 3042, and a communication I/F (interface) 3050. In the present embodiment, the TOF measurement device 3040 and the control circuit 3042 are examples of a controller.

The TOF measurement device 3040 obtains the TOF based on the signal indicating the light projection timing received from the light projection control device 3026 and the signal indicating the light receiving timing received from the light receiving unit 3032. The TOF measurement device 3040 includes, for example, a time measurement IC equipped with a TDC circuit. The TOF measurement device 3040 inputs, to the control circuit 3042, the obtained TOF and the light receiving signal received from the light receiving unit 3032.

The control circuit 3042 includes a processor (CPU, MPU, ASIC, FPGA, DSP, or the like). The control circuit 3042 generates information used for various measurements such as detection of the measurement target W and distance measurement based on the light receiving signal and the TOF received from the TOF measurement device 3040. The information is, for example, a histogram used in time correlated signal photon counting, a distance to each point of the measurement target W, or point cloud. The control circuit 3042 controls the light projection control device 3026 and the light receiving unit 3032. The control circuit 3042 controls, for example, the light projection control device 3026 and the light receiving unit 3032 to control the light projection timing and the light receiving timing described above such that processing related to generation of the histogram is accelerated or optimized. The information generated by the control circuit 3042 is provided (transmitted) to a device that uses the information (hereinafter referred to as "various utilization devices 3060") via the communication I/F 3050.

The various utilization devices 3060 perform, for example, creation of an environment map by point cloud, or simultaneous localization and mapping (SLAM) using a scan matching algorithm (NDT, ICP, or the like).

G-2: Variations in Light Projection Timing and Output Timing of Light Receiving Signal:

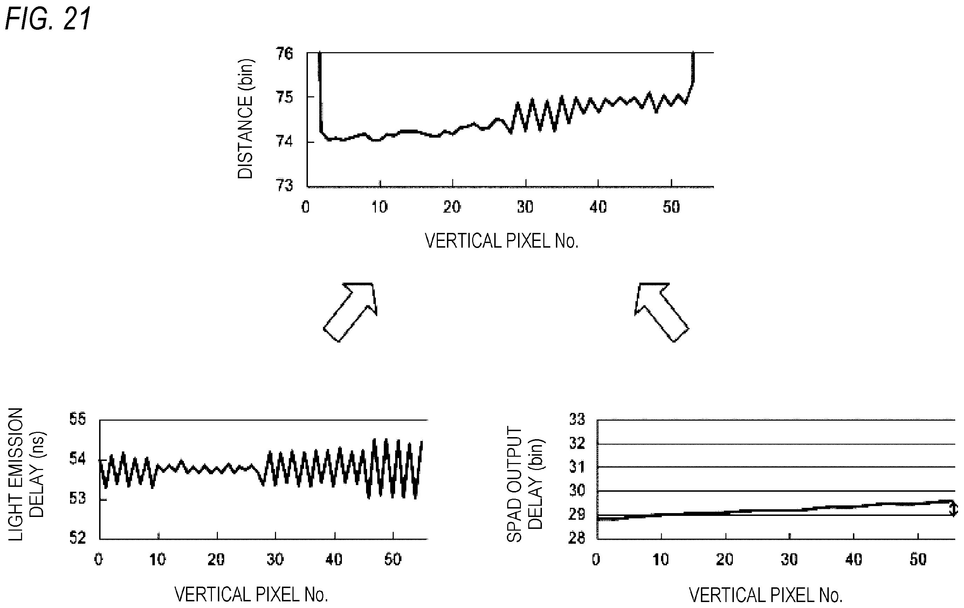

FIG. 21 is a diagram illustrating variations in the light projection timing and an output timing of the light receiving signal and results of distance measurement. In the light projector 3020 according to the present embodiment, the light emitting elements are arranged in a line, and a vertical pixel NO is a number assigned to each pixel constituted by a predetermined unit number of light emitting elements. Hereinafter, a case where the unit number is one will be described as an example, but the unit number may be plural.

The lower left of FIG. 21 illustrates the time from input of a trigger signal to light emission for each of the plurality of light emitting elements (VCSEL) included in the light projector 3020. As illustrated in the lower left of FIG. 21, the light projection timings of the plurality of light emitting elements vary. Factors of the variation in the light projection timing include a variation in a wiring length connected to the plurality of light projecting elements, a variation in the output timing of the trigger signal given to the light projector 3020, and the like.

The lower right of FIG. 21 illustrates the time from the input of the trigger signal to the output of the light receiving signal for each of the plurality of light receiving elements (SPAD) included in the light receiver 3030. As illustrated in the lower right of FIG. 21, the output timings of the light receiving signals of the plurality of light receiving elements vary. Factors of the variation in the output timing of the light receiving signal include a variation in a wiring length connected to the plurality of light receiving elements and a variation in response characteristics.

The upper part of FIG. 21 illustrates a result of measuring the distance to the measurement target W in a state where there is a variation in the light projection timing or the output timing of the light receiving signal. The measurement target W has, for example, a flat surface. The plurality of light emitting elements included in the light projector 3020 emit the emitted light L3001 toward the flat surface, and the plurality of light receiving elements included in the light receiver 3030 receive the reflected light L3002 reflected by the flat surface. The distance between each of the plurality of light emitting elements and the flat surface is uniform, and the distance between each of the plurality of light receiving elements and the flat surface is also uniform. In this case, originally, the distance from W should be uniform for all the pixels. However, in the upper part of FIG. 21, the measurement result of the distance to the measurement target W varies for each pixel. The factor is variations in the light projection timing and the output timing of the light receiving signal.

G-3. Manufacturing Method for Measurement Device 3010:

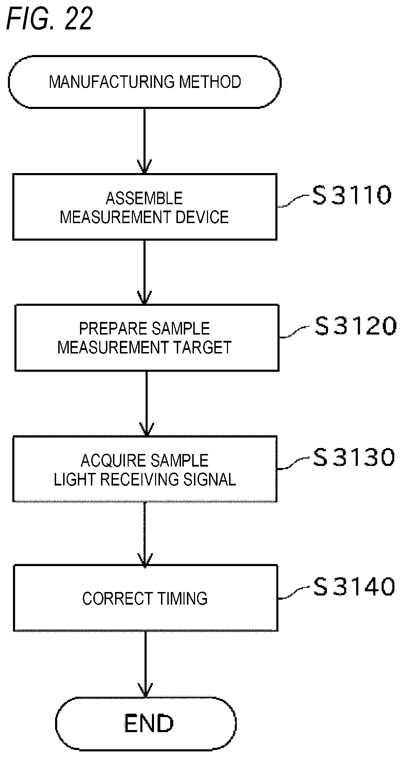

FIG. 22 is a flowchart illustrating a part of manufacturing steps of the measurement device 3010. First, the measurement device 3010 is assembled (S3110). The assembly of the measurement device 3010 does not need to be completed at this time point, and it is sufficient that an acquisition step of acquiring a sample light receiving signal described later may be executed.

Next, a sample measurement target having a flat surface is prepared (S3120). The step of S3120 is an example of a preparation step. The sample measurement target is, for example, a plate-shaped body and has a flat surface. The flat surface has uniform reflectance as a whole.

Next, a plurality of sample light receiving signals are acquired (S3130). The step of S3130 is an example of the acquisition step. Specifically, the emitted light L3001 is emitted from the plurality of light emitting elements included in the light projector 3020 toward the flat surface, the reflected light L3002 reflected by the flat surface is received by the plurality of light receiving elements included in the light receiver 3030, and the plurality of sample light receiving signals output from the plurality of light receiving elements are acquired. The distance between each of the plurality of light emitting elements and the flat surface is uniform, and the distance between each of the plurality of light receiving elements and the flat surface is also uniform. The distance to the flat surface for each pixel is measured based on the plurality of acquired sample light receiving signals, and an image reflecting a measurement result (hereinafter, referred to as "measurement result image") is obtained. Here, when there is no variation in the light projection timing or the output timing of the light receiving signal, the measurement result image is a monochromatic image without unevenness. On the other hand, when there is a variation in the light projection timing or the output timing of the light receiving signal (see upper part of FIG. 21), the measurement result image shows shading for each pixel and becomes a mixed color image having unevenness.

Therefore, the light projection timing and the output timing of the light receiving signal are corrected (S3140). The step of S3140 is an example of a correction step. At least one of the light emitting timing of the light emitting element and the output timing of the light receiving signal from the light receiving element is corrected such that the measurement result of the distance for each pixel is approximate to uniformity. Specifically, there are a correction method using wiring, a correction method using a light emitting trigger signal, and a correction method using a measurement result.

(1) Correction Method using Wiring

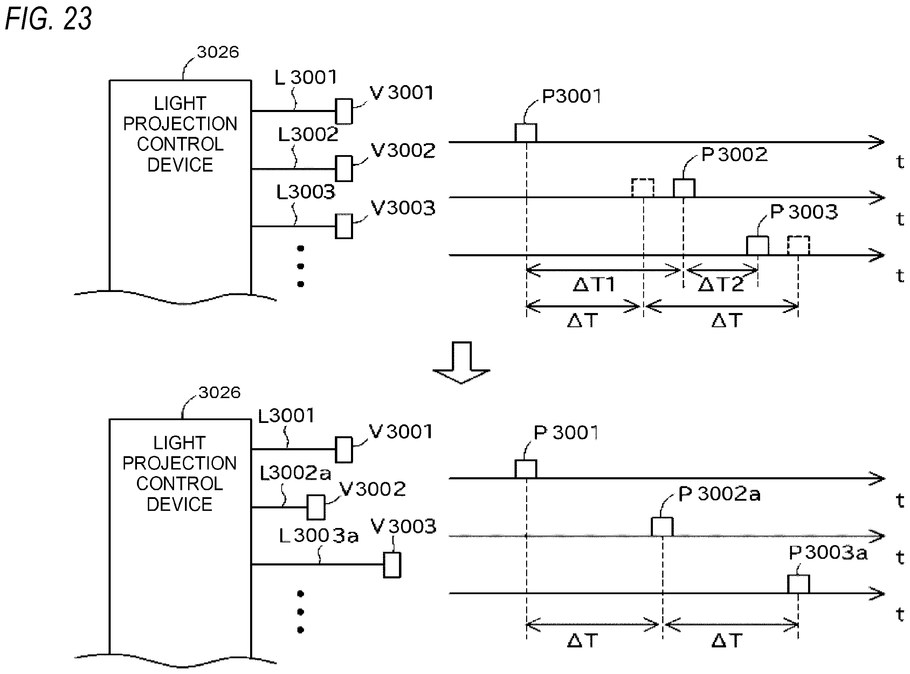

The correction method using wiring is a method of changing at least one of a wiring length connected to the light emitting element and a wiring length connected to the light receiving element. FIG. 23 is a diagram of an example of the correction method using wiring. In FIG. 23, the current source 3028 is omitted. The upper left part of FIG. 23 illustrates a wiring state before correction on a light projector 3020 side. Each of the plurality of light emitting elements (V3001, V3002, V3003, ···) is electrically connected to the light projection control device 3026 via wirings (L3001, L3002, L3003, ···). Lengths of the wirings (L3001, L3002, L3003, ···) connected to the plurality of light emitting elements are the same. The light projection control device 3026 sequentially outputs a trigger signal to the plurality of light emitting elements at a uniform time interval $\Delta T$. However, as illustrated on the upper right part of FIG. 23, the light projection timing interval of the plurality of light emitting elements varies due to a variation in response performance of the plurality of light emitting elements. A light projection timing interval $\Delta T1$ between the light emitting element V3001 and the light emitting element V3002 is longer than the time interval $\Delta T$, and a light projection timing interval $\Delta T2$ between the light emitting element V3002 and the light emitting element V3003 is shorter than the time interval $\Delta T$.

Therefore, the length of the wiring is changed so as to reduce the variation in the light projection timing interval of the plurality of light emitting elements. For example, as illustrated on the lower left part of FIG. 23, a wiring L3002a connected to the light emitting element V3002 is shorter than the wiring L3001 connected to the light emitting element V3001, and a wiring L3003a connected to the light emitting element V3003 is longer than the wiring L3001 connected to the light emitting element V3001. Accordingly, as illustrated on the lower right part of FIG. 23, the variation in the light projection timing interval of the plurality of light emitting elements is reduced. According to the correction method using wiring, it is possible to reduce a decrease in the measurement accuracy of the distance to the measurement target W by adjusting the hardware configuration.

(2) Correction Method using Light Emitting Trigger Signal

The correction method using a light emitting trigger signal changes the output timing of the trigger signal given to the light emitting element by the light projection control device 3026. In the example of the upper part of FIG. 23, the output timing of the trigger signal output by the light projection control device 3026 is changed without changing the wiring length so as to reduce the variation in the light projection timing interval of the plurality of light emitting elements. According to the correction method using a light emitting trigger signal, it is possible to reduce a decrease in the measurement accuracy of the distance to the measurement target W by adjusting the configuration on the light projector 3020 side.

(3) Correction Method using Measurement Result

In the correction method using a measurement result, correction information for correcting the measurement result obtained by the TOF measurement device 3040 or the control circuit 3042 based on the light receiving signal from the light receiving element such that the measurement result is approximate to uniformity is generated based on the measurement result of the distance for each pixel. The correction information is, for example, a correction value that cancels an error in distance measurement between pixels in the upper part of FIG. 21. According to the correction method using a measurement result, it is possible to prevent a decrease in the measurement accuracy of the distance to the measurement target W by correcting software processing without requiring the adjustment work of the hardware configuration.

G-4. Effects of Present Embodiment:

As described above, for example, it is possible to prevent a decrease in the measurement accuracy of the distance to the measurement target W due to a variation in the light projection timing from the light projector 3020, a variation in the output timing of the light receiving signal from the light receiving element in the light receiver 3030, or the like.

H. Modification of Fourth Embodiment:

The technique disclosed in the present description is not limited to the above-described embodiment, and can be modified into various forms without departing from the gist thereof, and for example, the following modifications are also possible.
The configuration of the measurement device 3010 in the above embodiment is merely an example, and various modifications may be made.
The flowchart of the manufacturing method for the measurement processing in the above embodiment is an example, and various modifications may be made.
The present application is based on Japanese Patent Application No. 2023-131178 filed on August 10, 2023, Japanese Patent Application No. 2023-131175 filed on August 10, 2023, Japanese Patent Application No. 2023-131177 filed on August 10, 2023, and Japanese Patent Application No. 2023-131176 filed on August 10, 2023, the contents of which are incorporated herein by reference.

INDUSTRIAL APPLICABILITY

According to the present disclosure, it is possible to estimate the light receiving timing based on the first arrival timing and the second arrival timing even when the incident light amount of the reflected light on the light receiving surface is in the saturated state.

**Claims**

1.  A measurement device comprising:

    a light projector configured to emit light;
    a light receiver including a light receiving surface on which a plurality of photon count type light receiving elements are arranged in an array, the light receiver being configured to receive reflected light that is the light emitted from the light projector and reflected by a measurement target; and
    a controller,
    wherein the controller executes:

    histogram generation processing of generating a histogram based on output values from the plurality of light receiving elements;
    light receiving timing estimation processing of estimating a light receiving timing of the reflected light based on a first arrival timing at which the histogram first reaches an intermediate value between a maximum value and a minimum value of a waveform of the histogram and based on a second arrival timing at which the histogram next reaches the intermediate value; and
    output processing of outputting information corresponding to a distance to the measurement target based on a light projection timing at which the light projector emits light and the light receiving timing.

2.  The measurement device according to claim 1,

    wherein the controller further executes
    light receiving timing correction processing of correcting the light receiving timing according to a height of a peak of the histogram when the histogram is less than a saturation level.

3.  The measurement device according to claim 1 or 2,

    wherein the controller further executes
    light receiving timing correction processing of correcting the light receiving timing according to a length of a time difference between the first arrival timing and the second arrival timing when the histogram exceeds a saturation level.

4.  The measurement device according to claim 1 or 2,
    wherein the controller further executes:

    disturbance light histogram generation processing of generating a disturbance light histogram based on the output values from the plurality of light receiving elements when the light receiving surface is not irradiated with the reflected light; and
    arrival timing correction processing of correcting the second arrival timing according to a height of a peak of the disturbance light histogram.

5.  A measurement device comprising:

    a light projector configured to emit light;
    a light receiver including a light receiving surface on which a plurality of photon count type light receiving elements are arranged in an array, the light receiver being configured to receive reflected light that is the light emitted from the light projector and reflected by a measurement target; and
    a controller,
    wherein the controller executes:

    histogram generation processing of generating a histogram based on output values from the plurality of light receiving elements; and
    first incident light amount estimation processing of estimating an incident light amount of the reflected light based on a time difference between a first arrival timing at which the histogram first reaches an intermediate value between a maximum value and a minimum value of a waveform of the histogram and a second arrival timing at which the histogram next reaches the intermediate value.

**6.** The measurement device according to claim 5,

wherein the controller further executes
second incident light amount estimation processing of estimating the incident light amount of the reflected light based on the output values from the plurality of light receiving elements and a logarithmic function represented by the following formula when a peak of the histogram is lower than a saturation level and a difference between the peak of the histogram and an incident light amount of disturbance light is equal to or larger than a reference value:

incident light amount of reflected light = $10^{(a \times \text{output value from light receiving element} + b)}$
here, a and b are coefficients.

**7.** The measurement device according to claim 5 or 6,

wherein the controller further executes
third incident light amount estimation processing of estimating the incident light amount of the reflected light based on the output values from the plurality of light receiving elements and a real function represented by the following formula when a peak of the histogram is lower than a saturation level and a difference between the peak of the histogram and an incident light amount of disturbance light is less than a reference value:

incident light amount of reflected light = $c \times$ output value from light receiving element + d
here, c and d are coefficients.

**8.** The measurement device according to claim 6,

wherein the controller further executes
first coefficient correction processing of correcting a coefficient a of the logarithmic function to a smaller value as the incident light amount of the disturbance light is higher.

**9.** The measurement device according to claim 7,

wherein the controller further executes
second coefficient correction processing of correcting a coefficient c of the real function to a smaller value as the incident light amount of the disturbance light is higher.

**10.** A measurement device comprising:

a light projector configured to emit light;
a light receiver including a light receiving surface on which a plurality of light receiving elements are arranged in an array, the light receiver being configured to receive reflected light that is the light emitted from the light projector and reflected by a measurement target; and
a controller,
wherein the controller executes:

first measurement processing of acquiring, for the plurality of light receiving elements arranged in at least a part of a target region of the light receiving surface, output values of the plurality of light receiving elements in a first acquisition unit determined by the number of the light receiving elements constituting one pixel and an integration count of the output values of the plurality of light receiving elements, and measuring a distance to the measurement target based on an obtained output result; and
second measurement processing of acquiring, for the plurality of light receiving elements arranged in the target region, output values of the plurality of light receiving elements in a second acquisition unit in which at least one of the number of light receiving elements constituting one pixel and the number of times of integration of output values of the plurality of light receiving elements is different from that for the first acquisition unit, and measuring a distance to the measurement target based on an obtained output result,.

**11.** The measurement device according to claim 10,

wherein the second acquisition unit has a larger output total value than the first acquisition unit, the output total value being determined according to the number of the light receiving elements constituting one pixel and the integration count of the output values of the light receiving elements, and

the controller switches to the second measurement processing and executes the second measurement processing when a switching condition is satisfied during execution of the first measurement processing.

12. The measurement device according to claim 10 or 11,
wherein in the second acquisition unit, the number of the light receiving elements constituting one pixel is larger than that in the first acquisition unit, and the integration count of the output values of the light receiving elements is equal to or smaller than that in the first acquisition unit.

13. The measurement device according to claim 10 or 11,
wherein in the second acquisition unit, the number of the light receiving elements constituting one pixel is equal to or smaller than that in the first acquisition unit, and the integration count of the output values of the light receiving elements is larger than that in the first acquisition unit.

14. The measurement device according to claim 10 or 11,

wherein the controller executes
the second measurement processing on a specific region which is a part of the light receiving surface and performs the first measurement processing on a region of the light receiving surface other than the specific region when a switching condition is satisfied and a region limitation condition is satisfied during execution of the first measurement processing.

15. A measurement device comprising:

a light projector configured to emit light;
a light receiver including a light receiving surface on which a plurality of light receiving elements are arranged in an array, the light receiver being configured to receive reflected light that is the light emitted from the light projector and reflected by a measurement target;
a controller; and
a memory,
wherein the controller executes
update processing of repeatedly executing an update operation of writing light receiving data output from the plurality of light receiving elements into the memory after a light projection timing of the light projector, and overwriting the memory with light receiving data output from the plurality of light receiving elements thereafter when a writing amount of the light receiving data reaches a reference value of the memory; and
when reflected light receiving data, which is the light receiving data corresponding to the reflected light, is written into the memory, measurement processing of extracting a light receiving data group including the reflected light receiving data and measuring a distance to the measurement target.

16. The measurement device according to claim 15,

wherein the controller further executes
reference value changing processing of changing the reference value of the memory.

17. The measurement device according to claim 15,
wherein the controller stops the update processing when the reflected light receiving data is written in the memory.

18. The measurement device according to claim 17,
wherein when the update processing is stopped for a first pixel in the light receiver, the controller uses a memory area allocated to the first pixel for update processing of light receiving data for a second pixel.

19. A measurement method for a measurement device including a light projector configured to emit light, a light receiver including a light receiving surface on which a plurality of light receiving elements are arranged in an array, the light receiver being configured to receive reflected light that is the light emitted from the light projector and reflected by a measurement target, and a memory, the measurement method comprising:

an update step of repeatedly executing an update operation of writing light receiving data output from the plurality of light receiving elements into the memory after a light projection timing of the light projector, and overwriting the memory with light receiving data output from the plurality of light receiving elements thereafter when a writing amount of the light receiving data reaches a reference value of the memory; and

when reflected light receiving data, which is the light receiving data corresponding to the reflected light, is written into the memory, a measurement step of extracting a light receiving data group including the reflected light receiving data and measuring a distance to the measurement target.

20. A manufacturing method for a measurement device including a light projector having one or a plurality of light emitting elements, a light receiver including a light receiving surface on which a plurality of light receiving elements are arranged in an array, the light receiver being configured to receive reflected light that is the light emitted from the light projector and reflected by a measurement target, and a controller configured to control the light projector and the light receiver, the manufacturing method comprising:

a preparation step of preparing a sample measurement target having a flat surface;

an acquisition step of causing the light projector to emit light toward the flat surface of the sample measurement target, causing the light receiving surface of the light receiver to receive the reflected light reflected by the flat surface, and acquiring a measurement result of a distance to the flat surface for each pixel based on a plurality of sample light receiving signals output from the plurality of light receiving elements; and

a correction step of correcting at least one of a light emitting timing of the light emitting element and an output timing of a light receiving signal from the light receiving element such that the measurement result of the distance for each pixel is approximate to uniformity.

21. The manufacturing method for a measurement device according to claim 20,
wherein in the correction step, at least one of a wiring length connected to the light emitting element and a wiring length connected to the light receiving element is changed.

22. The manufacturing method for a measurement device according to claim 20,
wherein in the correction step, an output timing of a trigger signal given to the light emitting element by the controller is changed.

23. The manufacturing method for a measurement device according to claim 20,
wherein in the correction step, correction information for correcting a measurement result obtained by the controller based on the light receiving signal from the light receiving element such that the measurement result is approximate to uniformity is generated based on the measurement result of the distance for each pixel.

*FIG. 1*

EP 4 760 340 A1

*FIG. 2*

*FIG. 3*

ESTIMATION PROCESSING

GENERATE HISTOGRAM — S110

ACQUIRE ARRIVAL TIMINGS T1 AND T2 — S120

CORRECT SECOND ARRIVAL TIMING T2 — S130

ESTIMATE LIGHT RECEIVING TIMING — S140

CORRECT LIGHT RECEIVING TIMING — S150

MEASURE DISTANCE FROM MEASUREMENT TARGET W — S160

S170

SATURATED STATE? — NO

YES

S180

ESTIMATE INCIDENT LIGHT AMOUNT BASED ON TIME DIFFERENCE ΔT

S190

PEAK INTENSITY DIFFERENCE IS EQUAL TO OR GREATER THAN REFERENCE VALUE? — NO

S200

YES

ESTIMATE INCIDENT LIGHT AMOUNT BASED ON LOGARITHMIC FUNCTION

S210

ESTIMATE INCIDENT LIGHT AMOUNT BASED ON REAL FUNCTION

S220

ESTIMATE REFLECTANCE OF MEASUREMENT TARGET W

RETURN

## FIG. 4

NON-SATURATED STATE

## FIG. 5

SATURATED STATE

FIG. 6

FIG. 7

EP 4 760 340 A1

*FIG. 8*

EP 4 760 340 A1

FIG. 9

FIRST REGION E1

TIME DIFFERENCE ΔT

SPAD OUTPUT VALUE (counts)

THa

E1

D

Amb=500

Amb=0

Received Power ( Relative )

G1a

G1b

G1c

Amb=0

Amb=500

Received Power ( Relative )

SECOND REGION E2

SPAD OUTPUT VALUE (counts)

E2

G2c

G2b

G2a

Received Power ( Relative )

THIRD REGION E3

SPAD OUTPUT VALUE (counts)

G3c

G3b

G3a

Received Power ( Relative )

EP 4 760 340 A1

**FIG. 10**

EP 4 760 340 A1

FIG. 11

EP 4 760 340 A1

## FIG. 12

*FIG. 13*

INCIDENT
LIGHT AMOUNT

OUT

OUT

OUT

t

INCIDENT
LIGHT AMOUNT

OUT

t

EP 4 760 340 A1

## FIG. 14

INCIDENT LIGHT AMOUNT

1032

1032A

INCIDENT LIGHT AMOUNT

EP 4 760 340 A1

FIG. 15

FIG. 16

## FIG. 17

```
           ( MEMORY PROCESSING )
                    │
                    ▼
        ┌───────────────────────┐
        │  DETERMINE UTILIZATION │── S 2110
        │      MEMORY AREA       │
        └───────────────────────┘
                    │
                    ▼
        ┌───────────────────────┐
        │   START WRITING LIGHT  │── S 2120
        │   RECEIVING DATA TO    │
        │  UTILIZATION MEMORY AREA│
        └───────────────────────┘
                    │
                    ▼ ◄──────────────────────────────────┐
              S2130                                       │
                ╱╲                                        │
               ╱  ╲     NO                                │
              ╱ REFLECTED ╲──────────────────┐           │
              ╲ LIGHT L2  ╱                   ▼           │
               ╲DETECTED?╱              S2150             │
                ╲  ╱                      ╱╲              │
                 ╲╱                      ╱  ╲    NO       │
              YES │      S2140          ╱WRITING╲─────────┘
                  │                    ╱ AMOUNT  ╲
                  ▼                    ╲ REACHES ╱
        ┌──────────────────┐          ╲REFERENCE╱
        │  EXTRACT LIGHT   │           ╲ VALUE? ╱
        │ RECEIVING DATA IN│            ╲  ╱
        │UTILIZATION MEMORY │             ╲╱
        │      AREA        │          YES │   S2160
        └──────────────────┘              │
                  │  S2180                 ▼
                  ▼              ┌──────────────────┐
        ┌──────────────────┐    │  START MEMORY    │
        │   STOP UPDATE    │    │   OVERWRITING    │
        │PROCESSING AND RELEASE│ └──────────────────┘
        │ FOR OTHER PIXELS │         │ NO   S2170
        └──────────────────┘          ▼
                  │            ┌──────────────────┐
                  ▼            │  OVERWRITE COUNT │
             ( EXIT )          │     N←N+1        │
                               └──────────────────┘
```

FIG. 18

FIG. 19

SPAD OUTPUT VALUE (counts)

FIRST PIXEL

$\Delta TS$        $\Delta Tf$

SPAD OUTPUT VALUE (counts)

SECOND PIXEL

$\Delta T$        $\Delta Tf$

t

EP 4 760 340 A1

FIG. 20

EP 4 760 340 A1

FIG. 21

*FIG. 22*

```
┌──────────────────────────────┐
│     MANUFACTURING METHOD      │
└──────────────────────────────┘
                │
                ▼
┌──────────────────────────────┐
│          ASSEMBLE            │  ─── S3110
│     MEASUREMENT DEVICE       │
└──────────────────────────────┘
                │
                ▼
┌──────────────────────────────┐
│       PREPARE SAMPLE         │  ─── S3120
│     MEASUREMENT TARGET       │
└──────────────────────────────┘
                │
                ▼
┌──────────────────────────────┐
│       ACQUIRE SAMPLE         │  ─── S3130
│    LIGHT RECEIVING SIGNAL    │
└──────────────────────────────┘
                │
                ▼
┌──────────────────────────────┐
│        CORRECT TIMING        │  ─── S3140
└──────────────────────────────┘
                │
                ▼
┌──────────────────────────────┐
│            END               │
└──────────────────────────────┘
```

*FIG. 23*

EP 4 760 340 A1

## INTERNATIONAL SEARCH REPORT

| International application No. |
|---|
| **PCT/JP2024/025391** |

**A. CLASSIFICATION OF SUBJECT MATTER**

*G01S 7/486*(2020.01)i; *G01S 7/497*(2006.01)i; *G01S 17/894*(2020.01)i; *G01S 17/931*(2020.01)i
FI: G01S7/486; G01S17/931; G01S17/894; G01S7/497

According to International Patent Classification (IPC) or to both national classification and IPC

**B. FIELDS SEARCHED**

Minimum documentation searched (classification system followed by classification symbols)

G01S7/48 - 7/51, G01S17/00 - 17/95, G01C3/00 - 3/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2023-10254 A (DENSO CORPORATION) 20 January 2023 (2023-01-20) paragraphs [0015]-[0020], [0032]-[0036], fig. 1, 5, 6 | 1-5 |
| A | | 6-9 |
| Y | JP 11-125676 A (AISIN SEIKI KABUSHIKI KAISHA) 11 May 1999 (1999-05-11) paragraphs [0020], [0021] | 1-4 |
| Y | JP 2023-63915 A (DENSO CORPORATION) 10 May 2023 (2023-05-10) paragraphs [0038], [0079], [0080] | 2-4 |
| Y | JP 2012-237625 A (HONDA MOTOR CO., LTD.) 06 December 2012 (2012-12-06) paragraphs [0017], [0018] | 5 |
| A | | 6-9 |
| X | JP 2009-85707 A (FUJIFILM CORPORATION) 23 April 2009 (2009-04-23) paragraphs [0033], [0043], [0044], [0050], [0060], [0061], [0086], fig. 1, 3 | 10-11, 13 |
| Y | | 12, 14 |

☑ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/025391** |

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2022/195954 A1 (SONY SEMICONDUCTOR SOLUTIONS CORPORATION) 22 September 2022 (2022-09-22)<br>paragraph [0009] | 12 |
| Y | WO 2023/15214 A1 (ATIEVA, INC.) 09 February 2023 (2023-02-09)<br>paragraphs [0045]-[0048] | 14 |
| X | JP 2013-11558 A (KABUSHIKI KAISHA TOPCON) 17 January 2013 (2013-01-17)<br>paragraphs [0031], [0054]-[0056], [0058]-[0066], fig. 1, 3 | 15, 17, 19 |
| Y | | 18 |
| A | | 16 |
| Y | JP 2017-125844 A (SICK AG) 20 July 2017 (2017-07-20)<br>paragraphs [0002]-[0004] | 18 |
| X | JP 2023-509729 A (HUAWEI TECHNOLOGIES CO., LTD.) 09 March 2023 (2023-03-09)<br>paragraphs [0026], [0028], [0029], [0031], [0045]-[0052], fig. 1, 2 | 20, 21, 23 |
| Y | | 22 |
| Y | JP 2017-125829 A (RICOH COMPANY, LTD.) 20 July 2017 (2017-07-20)<br>paragraphs [0030], [0077]-[0079] | 22 |

Form PCT/ISA/210 (second sheet) (July 2022)

## INTERNATIONAL SEARCH REPORT

International application No.

**PCT/JP2024/025391**

**Box No. III      Observations where unity of invention is lacking (Continuation of item 3 of first sheet)**

This International Searching Authority found multiple inventions in this international application, as follows:

The following inventions 1-5 are included in the claims.

(Invention 1) Claims 1-4

Claims 1 to 4 have the special technical feature in which the "controller" "performs" "a light reception timing estimation process of estimating light reception timing of the reflected light on the basis of a first arrival timing at which the histogram reaches first an intermediate value between the maximum value and the minimum value of the histogram waveforms and a second arrival timing at which the histogram reaches subsequently the intermediate value," and are thus classified as invention 1.

(Invention 2) Claims 5-9

Claims 5-9 share, with claim 1 classified as invention 1, the common technical feature of a "measuring device" "comprising: a light projector which emits light; a light receiver which receives reflected light emitted from the light projector, reflected onto a measurement target, and then returned and has a light receiving surface on which a plurality of photon-counting type light receiving elements are arranged in an array shape; and a controller, wherein the controller performs a histogram generating process of generating a histogram on the basis of output values obtained from the plurality of light receiving elements, and a predetermined process on the basis of a first reaching timing at which the histogram reaches first an intermediate value between the maximum value and the minimum value of histogram waveforms, and a second reaching timing at which the histogram reaches subsequently the intermediate value." However, the technical feature does not make a contribution over the prior art in light of the disclosures of document 1, and thus cannot be said to be a special technical feature. Also, there are no other same or corresponding special technical features between these inventions.

Additionally, claims 5-9 do not depend from claim 1. Furthermore, claims 5-9 are not substantially identical to or similarly closely related to any of the claims classified as invention 1.

Therefore, claims 5-9 cannot be classified as invention 1.

Moreover, claims 5-9 have the special technical feature in which the "controller" "performs a first incident light amount estimation process of estimating an incident light amount of the reflected light on the basis of a time difference between a first arrival timing at which the histogram reaches first an intermediate value between the maximum value and the minimum value of the histogram waveforms and a second arrival timing at which the histogram reaches subsequently the intermediate value," and are thus classified as invention 2.

(Invention 3) Claims 10-14

Claims 10-14 share, with claims 1 and 5 respectively classified as inventions 1 and 2, the common technical feature of a "measuring device comprising: a light projector which emits light; a light receiver which receives reflected light emitted from the light projector, reflected onto a measurement target, and then returned and has a light receiving surface on which a plurality of light receiving elements are arranged in an array shape; and a controller." However, the technical feature does not make a contribution over the prior art in light of the disclosures of document 1, and thus cannot be said to be a special technical feature. Also, there are no other same or corresponding special technical features between these inventions.

Additionally, claims 10-14 do not depend from claims 1 and 5. Furthermore, claims 10-14 are not substantially identical to or similarly closely related to any of the claims classified as invention 1 or 2.

Therefore, claims 10-14 cannot be classified as any of inventions 1 or 2.

Moreover, claims 10-14 have the special technical feature in which "the controller performs: a first measurement process for the plurality of light receiving elements arranged in at least a part of a target region of the light receiving surface, the first measurement process of acquiring output values of the plurality of light receiving elements in a first acquisition unit determined by the number of the light receiving elements constituting one pixel and the cumulative number of output values of the light receiving elements, and measuring a distance to the measurement target on the basis of the obtained output result; and a second measurement process for the plurality of light receiving elements arranged in the target region, the second measurement process of acquiring output values of the plurality of light receiving elements in a second acquisition unit of which at least one of the number of the light receiving elements constituting one pixel or the cumulative number of output values of the light receiving elements is different from that of the first acquisition unit, and measuring a distance to the measurement target on the basis of the obtained output result," and are thus classified as invention 3.

(Invention 4) Claims 15-19

Form PCT/ISA/210 (continuation of first sheet) (July 2022)

**INTERNATIONAL SEARCH REPORT**

International application No.

**PCT/JP2024/025391**

| Box No. III | Observations where unity of invention is lacking (Continuation of item 3 of first sheet) |
|---|---|

Claims 15-18 share, with claims 1, 5, and 10 respectively classified as inventions 1-3, the common technical feature of a "measuring device comprising: a light projector which emits light; a light receiver which receives reflected light emitted from the light projector, reflected onto a measurement target, and then returned and has a light receiving surface on which a plurality of light receiving elements are arranged in an array shape; and a controller." However, the technical feature does not make a contribution over the prior art in light of the disclosures of document 1, and thus cannot be said to be a special technical feature. Also, there are no other same or corresponding special technical features between these inventions.

In addition, claims 15-18 do not depend from claims 1, 5, and 10. Furthermore, claim 15 is not substantially identical to or similarly closely related to any of the claims classified as inventions 1-3.

Therefore, claims 15-18 cannot be classified as inventions 1-3.

Moreover, claims 15-18 have the special technical feature in which "the controller performs: an update process of repeatedly executing an update operation in which light reception data output from the plurality of light receiving elements is written in the memory after a light projection timing of the light projector, and then the light reception data output from the plurality of light receiving elements is overwritten in the memory when the amount of the written light reception data reaches a reference value of the memory; and a measurement process of extracting a light reception data group which includes the reflected light reception data and measuring a distance to the measurement target when the reflected light reception data which is the light reception data corresponding to the reflected light is written in the memory," and are thus classified as invention 4.

Additionally, claim 19 has the special technical feature corresponding to claim 15, and is thus classified as invention 4.

(Invention 5) Claims 20-23

Claims 20-23 do not share the common technical feature with claims 1, 5, 10, and 15 respectively classified as inventions 1-4. Accordingly, there are no other same or corresponding special technical features between these inventions.

Additionally, claims 20-23 do not depend from claims 1, 5, 10, and 15. Furthermore, claims 20-23 are not substantially identical to or similarly closely related to any of the claims classified as inventions 1-4.

Therefore, claims 20-23 cannot be classified as inventions 1-4.

Moreover, claims 20-23 have the special technical feature of "comprising: a preparation step in which a sample measurement target having a flat surface is prepared; an acquisition step in which light is emitted from the light projector toward the flat surface of the sample measurement target, reflected light reflected onto the flat surface and returned is received by the light receiving surface of the light receiver, and a measurement result of a distance to the flat surface for each pixel is acquired on the basis of a plurality of sample light receiving signals output from each of the plurality of light receiving elements; and a correction step in which at least one of a light emission timing of the light emitting element or an output timing of a light receiving signal from the light receiving element is corrected such that the measurement result of a distance for each pixel is almost uniform," and are thus classified as invention 5.

Form PCT/ISA/210 (continuation of first sheet) (July 2022)

## INTERNATIONAL SEARCH REPORT

| International application No. |
| --- |
| **PCT/JP2024/025391** |

**Box No. III      Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/025391**

| Patent document cited in search report | Publication date (day/month/year) | Patent family member(s) | Publication date (day/month/year) |
|---|---|---|---|
| JP 2023-10254 A | 20 January 2023 | (Family: none) | |
| JP 11-125676 A | 11 May 1999 | (Family: none) | |
| JP 2023-63915 A | 10 May 2023 | WO 2023/074407 A1 | |
| JP 2012-237625 A | 06 December 2012 | (Family: none) | |
| JP 2009-85707 A | 23 April 2009 | (Family: none) | |
| WO 2022/195954 A1 | 22 September 2022 | EP 4310549 A1<br>paragraph [0009]<br>CN 116997821 A<br>KR 10-2023-0158474 A<br>TW 202238172 A | |
| WO 2023/15214 A1 | 09 February 2023 | US 2023/0044279 A1<br>EP 4381324 A1<br>CN 117813530 A | |
| JP 2013-11558 A | 17 January 2013 | US 2013/0003040 A1<br>paragraphs [0044], [0066]-[0068], [0070]-[0078], fig. 1, 3<br>EP 2541274 A2 | |
| JP 2017-125844 A | 20 July 2017 | US 2017/0184709 A1<br>paragraphs [0002]-[0004]<br>EP 3185038 A1 | |
| JP 2023-509729 A | 09 March 2023 | US 2023/0041567 A1<br>paragraphs [0032], [0034], [0035], [0037], [0051]-[0055], fig. 1, 2<br>WO 2021/144019 A1<br>CN 115004056 A | |
| JP 2017-125829 A | 20 July 2017 | US 2017/0199271 A1<br>paragraphs [0058], [0104], [0106] | |

Form PCT/ISA/210 (patent family annex) (July 2022)

55

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018091760 A
- JP 2023131178 A
- JP 2023131175 A
- JP 2023131177 A
- JP 2023131176 A